(19) Europäisches Patentamt

European Patent Office

Office européen des brevets

(11) **EP 1 510 925 A2**

(12) **DEMANDE DE BREVET EUROPEEN**

(43) Date de publication:
**02.03.2005 Bulletin 2005/09**

(51) Int Cl.[7]: **G06F 12/14**, G06F 12/08

(21) Numéro de dépôt: **04019901.0**

(22) Date de dépôt: **23.08.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **27.08.2003 FR 0310212**

(71) Demandeur: **STMicroelectronics S.A.**
**92210 Montrouge (FR)**

(72) Inventeur: **Pistoulet, Pierre**
**94320 Thiais (FR)**

(54) **Mémoire cache à lecture asynchrone et dispositif de controle de l'accès à une mémoire de données comprenant une telle mémoire cache**

(57) La présente invention concerne une mémoire cache comprenant un plan mémoire (CMEM) comprenant des bascules logiques, et un circuit (CMC) de lecture de la mémoire cache agencé pour recevoir en entrée une étiquette de référence (MSB(ADrw)), comparer des étiquettes présentes dans la mémoire cache relativement à l'étiquette de référence et, si une étiquette est identique à l'étiquette de référence, sélectionner la donnée de base associée à l'étiquette identique. La présente invention concerne également un dispositif de contrôle de l'accès à une mémoire de données (DMEM), comprenant des moyens de stockage d'une pluralité d'attributs (ATi) définissant des droits d'accès à la mémoire de données, une mémoire cache (CMEM, CMC) selon l'invention pour enregistrer un nombre d'attributs déterminé, et un circuit synchrone (ASC2) de recherche d'attribut, pour rechercher un attribut dans les moyens de stockage (DMEM, ATMEM) si l'attribut ne se trouve pas dans la mémoire cache.

Fig. 5

**Description**

La présente invention concerne un procédé et un dispositif de contrôle de l'accès à une mémoire de données, en utilisant des attributs définissant des autorisations d'accès à des zones mémoire sécurisées de la mémoire de données.

Dans diverses applications, il est fréquent qu'une mémoire de données contienne des éléments dont l'accès doit être restreint en écriture, lecture ou en exécution (code programme). L'accès à une telle mémoire doit alors être contrôlé.

Un tel contrôle d'accès est notamment prévu dans les circuits intégrés pour carte à puce dont les mémoires contiennent des informations confidentielles comme des codes secrets, des numéros d'identification, des clefs de cryptographie... Ces informations sont lues par un microprocesseur lors des ouvertures de session faites sous le contrôle du système d'exploitation mais qui ne peuvent pas être lues par un programme utilisateur. Il s'agit alors d'un accès restreint en lecture. D'autres types de données peuvent être lus par tout type de programme mais ne peuvent pas être réécrits. Il s'agit alors d'un accès restreint en écriture.

Afin d'assurer un tel contrôle d'accès, les données sont regroupées dans la mémoire par type d'accès autorisé (même niveau d'autorisation) en les plaçant dans une zone mémoire déterminée à laquelle est associée une information relative aux autorisations d'accès accordées à la zone mémoire. Cette information est codée sous la forme d'un mot binaire appelé attribut. Le nombre total d'attributs est fonction du nombre de zones mémoire sécurisées ayant chacune un niveau d'autorisation particulier.

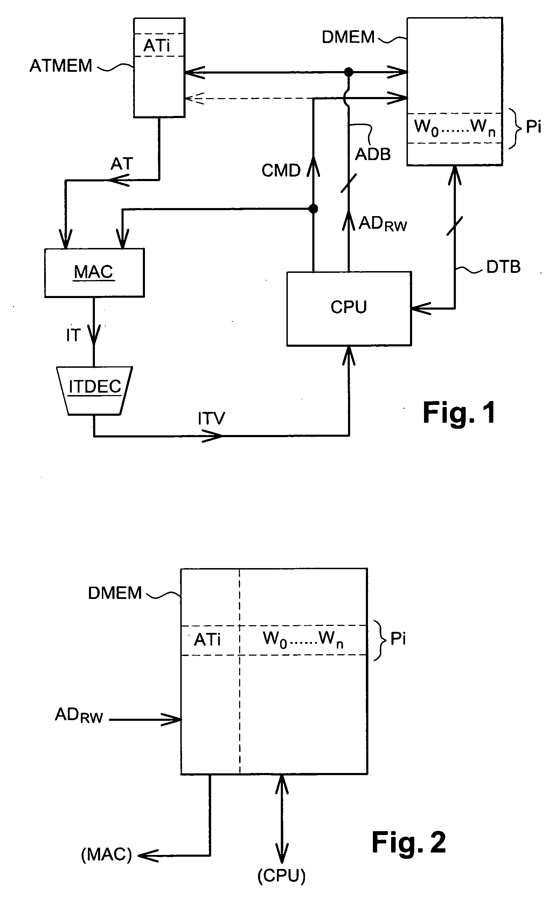

La figure 1 représente très schématiquement l'architecture d'un dispositif de contrôle d'accès classique implanté dans un circuit intégré comprenant un CPU (unité centrale de microprocesseur) et une mémoire de données DMEM. Le CPU et la mémoire sont reliés par un bus de données DTB et un bus d'adresses ADB. Le CPU envoie à la mémoire des commandes CMD d'accès en lecture (dans le cas d'une mémoire pouvant être uniquement lue) ou en lecture/écriture (dans le cas d'une mémoire pouvant être lue et écrite). La mémoire de données est sectorisée, ce qui signifie qu'elle comprend des zones présentant chacune un niveau de sécurité particulier déterminé par un attribut. Ces zones sont par exemple des pages Pi (lignes de mot) comprenant chacune une pluralité de mots binaires W0 à Wn.

Le dispositif de contrôle d'accès classique comprend essentiellement un circuit MAC (contrôleur d'accès mémoire) et une mémoire d'attributs ATMEM contenant une pluralité d'attributs ATi, chaque attribut correspondant à une zone mémoire sécurisée Pi de la mémoire de données DMEM.

Lorsque le CPU envoie à la mémoire de données DMEM une commande CMD, par exemple une commande de lecture, accompagnée de l'adresse ADrw d'un mot binaire à lire dans la mémoire de données, la mémoire d'attributs ATMEM fournit au circuit MAC l'attribut ATi correspondant à la page Pi dans laquelle le mot binaire doit être lu. Le circuit MAC détermine, en fonction de la nature de la commande CMD et de l'attribut, si cet accès est autorisé ou non. Le circuit MAC fournit par exemple un signal d'interdiction sous la forme d'un signal d'interruption IT. Le signal IT est appliqué à un décodeur d'interruption ITDEC qui fournit au CPU un vecteur d'interruption ITV.

D'autres informations peuvent être prises en compte par le circuit MAC pour déterminer les autorisations d'accès, par exemple le mode de fonctionnement du CPU (mode "utilisateur", mode "système d'exploitation", mode "test", etc.).

Un tel dispositif de contrôle d'accès présente l'avantage d'être rapide et transparent pour le CPU, puisque la lecture de l'attribut se fait simultanément à l'accès à la mémoire de données, une interdiction d'accès se traduisant par l'émission d'un signal d'interruption pendant le cycle d'horloge durant lequel l'accès à la mémoire est effectué, ou au cours du cycle d'horloge suivant.

Un tel dispositif présente également divers inconvénients.

D'une part, la mémoire d'attributs ATMEM occupe une surface de silicium non négligeable. Cette mémoire comprend en effet un plan mémoire de même type que celui de la mémoire de données, par exemple un plan mémoire EEPROM ou FLASH (effaçable et programmable électriquement), un plan mémoire ROM (accessible en lecture uniquement) ou RAM (plan mémoire volatile accessible en lecture et écriture, devant être initialisé après chaque remise à zéro du circuit intégré). L'accès à ce plan mémoire nécessite des circuits de contrôle tels un décodeur d'adresse, des amplificateurs de lecture ("sense amplifiers"), ainsi qu'une pompe de charges (pour un plan mémoire effaçable et programmable électriquement). Or, ces divers circuits de contrôle, ainsi que le plan mémoire lui-même, sont complexes et encombrants.

D'autre part, la lecture simultanée d'une donnée dans la mémoire DMEM et d'un attribut dans la mémoire ATMEM entraîne un pic de consommation de courant non négligeable, du fait du déclenchement simultané des amplificateurs de lecture et des décodeurs de chaque mémoire.

Un autre mode de réalisation classique d'un dispositif de contrôle d'accès est représenté schématiquement en figure 2. Ici, les attributs sont enregistrés dans la mémoire de données elle-même, et sont distribués dans les diverses pages sécurisées à raison d'un attribut ATi par page sécurisée Pi. Lorsqu'un mot binaire W0 à Wn est lu dans une page Pi, l'attribut correspondant ATi, enregistré dans la même page, est lu simultanément et est envoyé au circuit MAC.

Cette solution permet d'éviter l'implantation d'une mémoire d'attributs distincte mais nécessite la réalisation d'un décodeur de colonne complexe et l'ajout d'amplificateurs de lecture spécifiques pour la lecture parallèle d'un attribut pendant la lecture d'une donnée, de sorte que les pics de consommation subsistent lors du déclenchement simultané de tous les amplificateurs de lecture.

La présente invention vise ainsi à perfectionner les dispositifs de contrôle d'accès classiques.

Pour atteindre cet objectif, la présente invention prévoir tout d'abord une mémoire cache à lecture rapide, comprenant un plan mémoire comprenant des lignes de mot prévues chacune pour enregistrer une donnée comprenant une donnée de base et une étiquette associée à la donnée de base, et un circuit de gestion de la mémoire cache, comprenant un circuit asynchrone de lecture de la mémoire cache, à logique câblée et sans décodeur d'adresse, agencé pour recevoir en entrée une étiquette de référence, pour comparer simultanément toutes les étiquettes présentes dans la mémoire cache relativement à l'étiquette de référence et, si une étiquette est identique à l'étiquette de référence, sélectionner la donnée de base associée à l'étiquette identique et la fournir sur une sortie du circuit de lecture.

Selon un mode de réalisation, le circuit de gestion de la mémoire cache comprend un circuit de mise à jour de la mémoire cache agencé pour gérer la mémoire cache à la manière d'une pile en enregistrant des données dans la mémoire cache selon un ordre déterminé, de manière à éjecter de la mémoire cache les données les plus anciennes, une donnée ancienne étant une donnée lue dans la mémoire antérieurement à une donnée plus récente, une donnée plus récente étant une donnée lue plus récemment qu'une donné plus ancienne, une donnée plus récente pouvant avoir été enregistrée dans la mémoire cache antérieurement à une donnée plus ancienne.

Selon un mode de réalisation, le circuit de mise à jour de la mémoire cache est agencé pour enregistrer une nouvelle donnée au sommet de la pile tout en décalant vers le bas de la pile les données déjà présentes dans la mémoire cache et, si la pile est pleine, éjecter de la pile la donnée se trouvant au bas de la pile.

Selon un mode de réalisation, le circuit de mise à jour de la mémoire cache est également agencé pour placer au sommet de la pile une donnée lue dans la mémoire cache, et décaler vers le bas de la pile les données déjà présentes dans la mémoire cache, et, si la pile est pleine, éjecter de la pile la donnée se trouvant au bas de la pile.

Selon un mode de réalisation, le circuit asynchrone de lecture comprend une pluralité de comparateurs pour comparer simultanément les étiquettes se trouvant dans la mémoire cache relativement à l'étiquette de référence, et une pluralité de multiplexeurs pour, si une étiquette est identique à l'étiquette de référence, sélectionner la donnée de base associée à l'étiquette identique et la fournir sur la sortie du circuit de lecture.

Selon un mode de réalisation, la mémoire cache comprend des moyens de connexion électrique à des moyens de stockage d'une pluralité d'attributs, chaque attribut étant associé à une zone mémoire sécurisée déterminée d'une mémoire de donnée et définissant des autorisations d'accès à la zone mémoire sécurisée déterminée, les moyens de connexion étant agencés pour que la mémoire cache enregistre des attributs en tant que données de base, et des adresses de zones mémoire sécurisées associées aux attributs en tant qu'étiquettes associées aux données de base.

Selon un mode de réalisation, le plan mémoire comprend des bascules logiques recevant un signal de rafraîchissement périodique.

La présente invention concerne également un dispositif de contrôle de l'accès à une mémoire de données comprenant des zones mémoire sécurisées, la mémoire recevant des commandes d'accès en lecture ou en lecture/écriture, dispositif comprenant : des moyens de stockage d'une pluralité d'attributs, chaque attribut étant associé à une zone mémoire sécurisée déterminée de la mémoire et définissant des autorisations d'accès à la zone mémoire sécurisée déterminée, des moyens pour, lorsqu'une commande d'accès est envoyée à la mémoire de données, lire un attribut correspondant à une zone mémoire sécurisée visée par la commande d'accès, le dispositif comprenant une mémoire cache pour enregistrer un nombre d'attributs déterminé, la mémoire cache comprenant un plan mémoire comprenant des lignes de mot prévues chacune pour enregistrer un attribut et une adresse de zone mémoire sécurisée à laquelle l'attribut est associé, un circuit de gestion de la mémoire cache comprenant un circuit asynchrone de recherche d'attribut dans la mémoire cache sans décodage d'adresse, agencé pour, lorsqu'une commande d'accès est envoyée à la mémoire de données, rechercher dans la mémoire cache l'attribut correspondant à la zone mémoire sécurisée visée par la commande d'accès, et fournir l'attribut si celui-ci s'y trouve, et un circuit synchrone de recherche d'attribut, pour rechercher un attribut dans les moyens de stockage si l'attribut ne se trouve pas dans la mémoire cache.

Selon un mode de réalisation, le circuit de gestion de la mémoire cache est agencé pour enregistrer dans la mémoire cache un attribut lu dans les moyens de stockage par le circuit synchrone de recherche d'attribut.

Selon un mode de réalisation, le circuit de gestion de la mémoire cache enregistre dans la mémoire cache, avec chaque attribut, l'adresse d'une zone mémoire sécurisée de la mémoire de données à laquelle correspond l'attribut.

Selon un mode de réalisation, le circuit asynchrone de recherche d'attribut fournit un attribut lorsque l'adresse de zone mémoire sécurisée enregistrée dans la mémoire cache avec l'attribut correspond à l'adresse de la zone mémoire sécurisée visée par la commande d'accès envoyée à la mémoire de données.

Selon un mode de réalisation, le circuit asynchrone de recherche d'attribut comprend une pluralité de comparateurs pour comparer simultanément des adresses de zones mémoire sécurisées enregistrées dans la mémoire cache avec l'adresse de la zone mémoire sécurisée visée par la commande d'accès envoyée à la mémoire de données.

Selon un mode de réalisation, le plan mémoire de la mémoire cache comprend une pluralité de bascules logiques formant des cellules mémoire de la mémoire cache.

Selon un mode de réalisation, la mémoire cache est prévue pour enregistrer un nombre d'attributs déterminé inférieur au nombre d'attributs enregistrés dans les moyens de stockage, et le circuit de gestion de la mémoire cache comprend un circuit de mise à jour de la mémoire cache, pour gérer la mémoire cache à la manière d'une pile en mettant au sommet de la pile le dernier attribut lu dans la mémoire cache et en décalant vers le bas de la pile des attributs présents dans la pile.

Selon un mode de réalisation, le circuit de mise à jour de la mémoire cache est agencé pour enregistrer au sommet de la pile un nouvel attribut lu dans les moyens de stockage par le circuit synchrone de recherche d'attribut, et décaler vers le bas les autres attributs présents dans la pile.

Selon un mode de réalisation, les moyens de stockage sont formés par une zone dédiée de la mémoire de données, et le circuit synchrone de recherche d'attribut est agencé pour, lorsqu'une commande d'accès est envoyée à la mémoire de données : intercepter la commande d'accès si l'attribut correspondant à la zone mémoire sécurisée visée par la commande d'accès ne se trouve pas dans la mémoire cache, lire dans la zone dédiée de la mémoire de données l'attribut correspondant à la zone mémoire sécurisée visée par la commande d'accès interceptée, puis appliquer la commande d'accès à la mémoire de données.

Selon un mode de réalisation, une commande d'accès comprend au moins un signal d'accès et une adresse d'accès, le circuit synchrone de recherche d'attribut est agencé pour, lorsque l'attribut correspondant à la zone mémoire sécurisée visée par la commande d'accès ne se trouve pas dans la mémoire cache : empêcher l'application à la mémoire de données du signal d'accès et de l'adresse d'accès, et appliquer à la mémoire de données un signal d'accès en lecture et une adresse d'accès correspondant à la zone dédiée aux attributs, de manière que la mémoire de données fournisse l'attribut correspondant à la zone mémoire sécurisée visée par la commande d'accès.

Selon un mode de réalisation, le circuit synchrone de recherche d'attribut, le circuit de gestion de la mémoire cache et la mémoire de données sont synchronisés par des signaux d'horloge décalés.

Selon un mode de réalisation, le circuit synchrone de recherche d'attribut est agencé pour envoyer un signal d'attente à un organe émetteur de la commande d'accès, pendant qu'un attribut est recherché dans la mémoire de données.

Selon un mode de réalisation, l'organe émetteur est une unité centrale de microprocesseur, qui est programmée pour maintenir une commande d'accès tant que le signal d'attente est présent.

Selon un mode de réalisation, le dispositif comprend un circuit de contrôle pour fournir un signal d'autorisation ou de refus de l'accès à la mémoire de données, en fonction de la valeur de l'attribut et de la nature de la commande d'accès envoyée à la mémoire de données.

La présente invention concerne également un procédé de contrôle de l'accès à une mémoire de données comprenant des zones mémoire sécurisées et recevant des commandes d'accès en lecture ou en lecture/écriture, en utilisant une pluralité d'attributs enregistrés dans des moyens de stockage d'attributs, chaque attribut étant associé à une zone mémoire sécurisée déterminée de la mémoire et définissant des autorisations d'accès à la zone mémoire sécurisée déterminée, comprenant une étape de recherche d'attribut lorsqu'une commande d'accès est envoyée à la mémoire de données, dans lequel une mémoire cache est prévue pour enregistrer un nombre d'attributs déterminé inférieur au nombre d'attributs enregistrés dans les moyens de stockage, et dans lequel l'étape de recherche d'attribut comprend : une étape asynchrone de recherche dans la mémoire cache de l'attribut correspondant à la zone mémoire sécurisée visée par la commande d'accès, sans utiliser de décodeur d'adresse, et de lecture de l'attribut si celui-ci s'y trouve, et une étape synchrone de recherche de l'attribut dans les moyens de stockage, si l'attribut ne se trouve pas dans la mémoire cache.

Selon un mode de réalisation, le procédé comprend l'enregistrement dans la mémoire cache d'un attribut non trouvé dans la mémoire cache et lu dans les moyens de stockage.

Selon un mode de réalisation, le procédé comprend l'enregistrement dans la mémoire cache, avec chaque attribut, de l'adresse d'une zone mémoire sécurisée de la mémoire de données à laquelle correspond l'attribut.

Selon un mode de réalisation, l'étape asynchrone de recherche d'un attribut dans la mémoire cache comprend une pluralité de comparaisons simultanées entre d'une part des adresses de zones mémoire sécurisées enregistrées dans la mémoire cache et d'autre part l'adresse de la zone mémoire sécurisée visée par la commande d'accès envoyée à la mémoire de données.

Selon un mode de réalisation, le procédé comprend une étape de mise à jour de la mémoire cache, pour gérer la mémoire cache à la manière d'une pile en mettant au sommet de la pile le dernier attribut lu dans la mémoire cache, et en décalant vers le bas de la pile des attributs présents dans la pile.

Selon un mode de réalisation, l'étape de mise à jour de la mémoire cache comprend une étape d'enregistrement au sommet de la pile d'un nouvel attribut lu dans les moyens de stockage(DMEM, ATMEM), en décalant vers le bas de la pile les autres attributs présents dans la pile.

Selon un mode de réalisation, les moyens de stockage sont formés par une zone dédiée de la mémoire de données, et l'étape synchrone de recherche d'attribut comprend les étapes suivantes : intercepter la commande d'accès si l'attribut correspondant à la zone mémoire sécurisée visée par la commande d'accès ne se trouve pas dans la mémoire cache, lire dans la zone dédiée de la mémoire de données l'attribut correspondant à la zone mémoire sécurisée visée par la commande d'accès interceptée, puis appliquer la commande d'accès à la mémoire de données.

Selon un mode de réalisation, une commande d'accès comprend au moins un signal d'accès et une adresse d'accès, et l'étape de synchrone recherche d'attribut comprend les étapes suivantes: empêcher l'application à la mémoire de données du signal d'accès et de l'adresse d'accès, et appliquer à la mémoire de données un signal d'accès en lecture et une adresse d'accès correspondant à la zone dédiée aux attributs, de manière que la mémoire de données fournisse l'attribut correspondant à la zone mémoire sécurisée visée par la commande d'accès.

Selon un mode de réalisation, le procédé comprend les étapes suivantes, exécutées en synchronisation avec trois signaux d'horloge décalés : à l'apparition d'un front de variation d'un premier signal d'horloge, chercher un attribut dans la mémoire cache, puis 1) si l'attribut est trouvé dans la mémoire cache, appliquer la commande d'accès à la mémoire de données à l'apparition d'un front de variation d'un deuxième signal d'horloge ; 2) si l'attribut n'est pas trouvé dans la mémoire cache : appliquer une adresse de lecture et un signal de lecture à la mémoire de données à l'apparition du front de variation du deuxième signal d'horloge, puis à l'apparition d'un front de variation d'un troisième signal d'horloge, lire l'attribut dans la mémoire cache, puis, à l'apparition du front de variation suivant du premier signal d'horloge, enregistrer l'attribut dans la mémoire cache, puis, à l'apparition du front de variation suivant du deuxième signal d'horloge, appliquer la commande d'accès à la mémoire de données.

Selon un mode de réalisation, le procédé comprend l'envoi d'un signal d'attente à un organe émetteur de la commande d'accès, pendant qu'un attribut est recherché dans la mémoire de données.

Selon un mode de réalisation, l'organe émetteur est une unité centrale de microprocesseur, qui est programmée pour maintenir la commande d'accès tant que le signal d'attente est présent.

Selon un mode de réalisation, le procédé comprend une étape de contrôle pour fournir un signal d'autorisation ou un refus de l'accès à la mémoire de données, en fonction de la valeur de l'attribut et de la nature de la commande d'accès envoyée à la mémoire de données.

Ces objets, caractéristiques et avantages ainsi que d'autres de la présente invention seront exposés plus en détail dans la description suivante du procédé de contrôle d'accès selon l'invention et de trois modes de réalisation d'un dispositif de contrôle d'accès selon l'invention, faite à titre non limitatif en relation avec les figures jointes parmi lesquelles :

- les figures 1 et 2 précédemment décrites représentent des dispositifs classiques de contrôle de l'accès à une mémoire de données,
- la figure 3 représente un premier mode de réalisation d'un dispositif de contrôle d'accès selon l'invention,
- la figure 4 représente l'architecture d'une mémoire de données contrôlée par le dispositif de contrôle d'accès de la figure 3,
- la figure 5 représente un deuxième mode de réalisation d'un dispositif de contrôle d'accès selon l'invention,
- la figure 6 représente l'organisation interne d'une mémoire cache selon l'invention, présente dans le dispositif de la figure 5,
- la figure 7 est le schéma bloc d'un circuit de recherche d'attribut présent dans le dispositif de la figure 5,
- la figure 8 est un diagramme d'états illustrant le fonctionnement du circuit de recherche d'attribut,
- les figures 9A à 9M sont des chronogrammes de signaux logiques illustrant le fonctionnement du dispositif de la figure 5,
- la figure 10 représente l'architecture d'une ligne de mot de la mémoire cache selon l'invention,
- la figure 11 est le schéma bloc d'un circuit de gestion de la mémoire cache,
- la figure 12 est le schéma logique d'un circuit de détection d'attribut présent dans le circuit de gestion de la figure 11,
- la figure 13 est le schéma logique d'un circuit de sélection d'attribut présent dans le circuit de gestion de la figure 11,
- la figure 14 est le schéma logique d'un circuit générateur de rang présent dans le circuit de gestion de la figure 11,
- les figures 15A, 15B, 16A, 16B, 17A, 17B illustrent des séquences de mise à jour de la mémoire cache,
- la figure 18 représente un troisième mode de réalisation d'un dispositif de contrôle d'accès selon l'invention.

**Premier mode de réalisation d'un dispositif de contrôle d'accès selon l'invention**

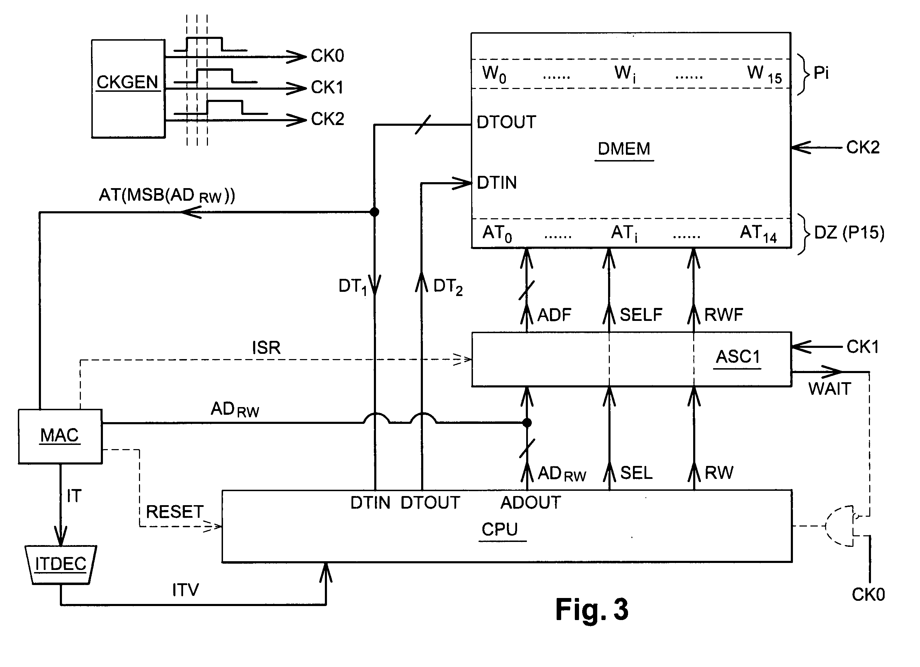

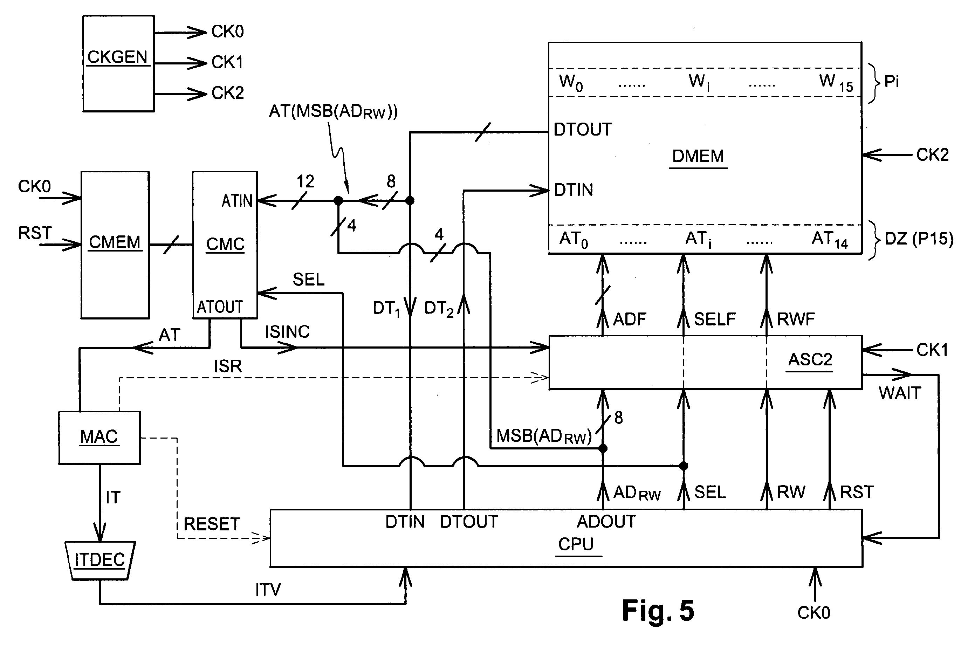

La figure 3 représente sous forme de blocs l'architecture d'un premier mode de réalisation d'un dispositif de contrôle d'accès selon l'invention.

Le dispositif de contrôle d'accès est ici mis en oeuvre dans un circuit intégré comprenant un CPU (unité centrale de microprocesseur) et une mémoire de données DMEM. Le CPU est cadencé par un signal d'horloge CK0 fourni par un générateur de signal d'horloge CKGEN. Il envoie à la mémoire DMEM des commandes d'accès qui comprennent ici une adresse ADrw de lecture/écriture de la mémoire DMEM, fournie par une sortie ADOUT du CPU, un signal SEL de sélection de la mémoire DMEM et un signal RW de lecture/écriture. Le signal RW est ici égal à 1 pour une opération de lecture et à 0 pour une opération écriture. Le CPU comprend également une sortie DTOUT reliée à une entrée DTIN de la mémoire DMEM, fournissant des données DT2, et la mémoire DMEM comprend une sortie DTOUT reliée à une entrée DTIN du CPU, fournissant des données DT1.

Le dispositif de contrôle d'accès comprend un circuit synchrone ASC1 de recherche d'attribut selon l'invention et un circuit de contrôle MAC de type classique, recevant un attribut AT lorsque le CPU envoie une commande d'accès à la mémoire de données. Lorsqu'un accès n'est pas autorisé, le circuit MAC fournit un signal d'interdiction, par exemple un signal d'interruption IT appliqué à un décodeur d'interruption ITDEC. Ce dernier fournit alors au CPU un vecteur d'interruption ITV (adresse d'un sous-programme de traitement de l'interdiction ou saut à une adresse comprenant l'adresse d'un sous-programme, pouvant être un sous-programme de remise à zéro software) et/ou un signal RESET de remise à zéro hardware.

Selon un premier aspect de l'invention, des attributs permettant de définir les droits d'accès aux pages sécurisées de la mémoire sont enregistrés dans une zone dédiée DZ de la mémoire de données DMEM.

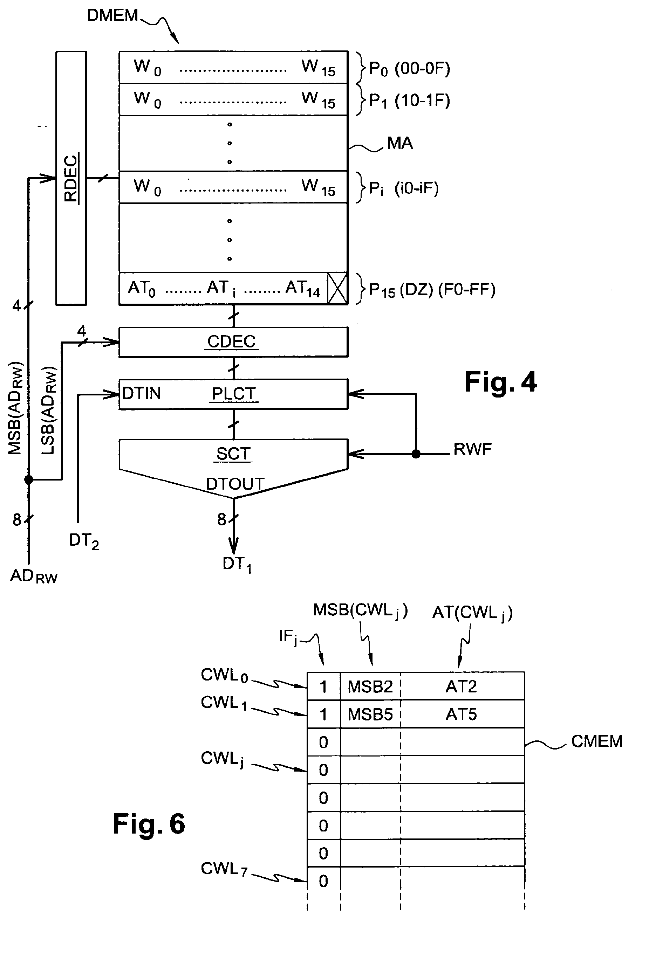

La figure 4 représente un exemple de réalisation de la mémoire DMEM, dans lequel la mémoire est adressée sous 8 bits (adresse ADrw). La mémoire DMEM comprend un plan mémoire MA, par exemple de type Flash ou EEPROM (effaçable et programmable électriquement), un décodeur de ligne de mot RDEC, un décodeur de colonne CDEC, un circuit de lecture SCT et un circuit d'écriture PLCT.

Le décodeur RDEC reçoit les 4 bits de poids fort MSB(ADrw) de l'adresse ADrw, et le décodeur CDEC reçoit les 4 bits de poids faible LSB(ADrw) de l'adresse ADrw. Le circuit PLCT comprend des verrous de programmation (non représentés) et comprend une entrée formant l'entrée DTIN de la mémoire, recevant les données DT2 fournies par le CPU. Le circuit SCT comprend des amplificateurs de lecture ("sense amplifiers", non représentés) et une sortie formant la sortie DTOUT de la mémoire, fournissant des données DT1 lues dans le plan mémoire MA. Les circuits SCT et PLCT sont reliés au plan mémoire MA par l'intermédiaire du décodeur de colonne CDEC, et reçoivent le signal RW de lecture/écriture.

Le plan mémoire MA comprend ici 16 pages P0 à P15 ayant chacune un niveau de sécurité déterminé. Chaque page peut recevoir une pluralité de mots binaires, par exemple 16 mots binaires W0 à W15 de 8 bits (octets). Les pages P0 à P14 reçoivent des données de travail (variables, clefs mathématiques, données secrètes, codes programme...) tandis que la page P15 est réservée au stockage d'attributs et forme la zone dédiée DZ de la mémoire DMEM. La page P15 ayant une capacité d'enregistrement de 16 mots binaires, elle peut recevoir 15 attributs AT0 à AT14 de 8 bits correspondant chacun à l'une des pages P0 à P14, en supposant ici que chacune des pages nécessite un contrôle d'accès. Ainsi, les bits MSB(ADrw) de l'adresse ADrw forment des adresses de pages (adresses de lignes de mot) tandis que les bits LSB(ADrw) correspondent aux adresses des mots dans les pages (adresses de colonne).

De préférence, chaque attribut est enregistré dans une colonne de la page P15 dont le rang correspond au rang de la page à laquelle correspond l'attribut. Le tableau 1 ci-après décrit la correspondance entre l'adresse ADrw d'un mot binaire Wi et l'adresse de l'attribut correspondant à la page Pi dans laquelle se trouve le mot binaire. On voit que les 4 bits de poids fort de l'adresse de l'attribut sont toujours égaux à F (adresse de la page P15) tandis que les 4 bits de poids faible de l'attribut sont égaux aux 4 bits de poids fort de l'adresse du mot binaire considéré, soit l'adresse de la page Pi à laquelle est associé l'attribut.

| Tableau 1 | Adresses[*] ADrw des mots W0 à W15 | Adresse[*] de l'attribut correspondant |
|---|---|---|
| Page P0 | 00 à 0F | F0 |
| Page P1 | 10 à 1F | F1 |
| ... | | |
| Page Pi ("i" indice) | i0 à iF | Fi |
| ... | | |
| Page P14 | E0 à EF | FE |

(*) notation hexadécimale

Selon un deuxième aspect de l'invention apparaissant en se référant de nouveau à la figure 3, le circuit synchrone ASC1 est intercalé entre le CPU et les entrées de la mémoire de données. Il assure un filtrage des signaux SEL, RW, et ADrw fournis par le CPU, et fournit, à la place de ces signaux, les signaux filtrés décrits par le tableau 2 ci-après.

Tableau 2

| Signaux envoyés par le CPU à la mémoire DMEM | Signaux filtrés fournis par le circuit ASC1 à la mémoire DMEM |
|---|---|
| SEL (valeur active : 1) | SELF (valeur active : 1) |
| RW (lecture : 1 ; écriture : 0) | RWF (lecture : 1 ; écriture : 0) |
| ADrw | ADF |

Le circuit ASC1 fournit également un signal WAIT dont la valeur active est par exemple 1. Ce signal est prévu pour geler les signaux SEL, RW et ADrw pendant une phase de recherche d'attribut décrite plus loin. Diverses mesures techniques peuvent être prises à cet effet, par exemple, comme représenté en traits pointillés sur la figure 4, appliquer le signal CK0 au CPU par l'intermédiaire d'une porte logique de type ET, recevant le signal CK0 sur une entrée non inverseuse et le signal WAIT sur une entrée inverseuse. Le CPU est alors bloqué quand WAIT=1 et les signaux SEL, RW et ADrw sont gelés. Toutefois, une alternative préférée, plus souple à l'emploi et plus avantageuse, est de programmer le CPU pour qu'il tienne compte du signal WAIT, de sorte qu'un blocage du signal d'horloge CK0 n'est alors pas nécessaire. En particulier, le CPU peut être programmé pour considérer que la combinaison d'un front montant du signal CK0 et de la condition WAIT=1 forme une requête lui demandant de reproduire à l'identique les signaux SEL, RW et ADrw. Dans ce cas, le CPU continue de recevoir le signal CK0 et est en mesure de traiter un signal d'interruption IT envoyé par le circuit MAC pendant que le signal WAIT est à 1.

Le circuit ASC1 est une machine d'états présentant trois états internes. La valeur des signaux filtrés et du signal WAIT est fonction de l'état interne du circuit ASC1, comme décrit par le tableau 3 ci-après. L'état IDL ("Idle") est un état de repos où le signal de sélection filtré SELF est maintenu à une valeur de non-sélection de la mémoire DMEM, ici 0. L'état ASEARCH ("Attribute Search") est un état actif de recherche d'attribut, dans lequel le signal WAIT est à 1. L'état AMA ("Authorised Memory Access") est un état transparent vis-à-vis des commandes envoyées par le CPU, dans lequel l'adresse ADF recopie l'adresse ADrw, les signaux RWF, SELF recopient les signaux RW, SEL, et le signal WAIT est à 0.

Afin de synchroniser le CPU, le circuit ASC1 et la mémoire DMEM, le générateur de signal d'horloge CKGEN fournit deux autres signaux d'horloge CK1, CK2 de même période T que le signal CK0 mais présentant des fronts de variation sensiblement décalés. Ainsi, le signal CK1 présente un retard dT relativement au signal CK0 et le signal CK2 présente le retard dT relativement au signal CK1, la somme des retards (2dT) étant choisie pour que la relation suivante soit vérifiée :

$$Tacc < T - 2dT$$

Tacc étant le temps d'accès de la mémoire de données, c'est à dire le temps que met la mémoire pour exécuter une commande d'accès en lecture ou écriture.

Le circuit ASC1 est cadencé par le signal CK1 et la mémoire DMEM est cadencée par le signal CK2. On suppose dans ce qui suit que le CPU, le circuit ASC1 et la mémoire DMEM sont sensibles aux fronts montants de ces divers signaux d'horloge.

Tableau 3

| Etat interne | Valeurs des signaux filtrés |
|---|---|
| IDL | SELF = 0 |
| | RWF = #[(*)] |
| | ADF = #[(*)] |
| | WAIT = 0 |
| ASEARCH | SELF = 1 |
| | RWF = 1 (lecture) |
| | ADF = F //MSB (ADrw) [(**)] |
| | WAIT = 1 |
| AMA | SELF = 1 |
| | RWF = RW (lecture ou écriture) |
| | ADF = ADrw |
| | WAIT = 0 |

(*)valeur par défaut, sans importance puisque SEL=0

(**) adresse d'un attribut, comme décrit plus loin

La réalisation d'une opération de lecture dans la mémoire DMEM comprend les étapes suivantes :

Premier cycle d'horloge

A l'apparition du front montant du signal CK0, le CPU met le signal SEL à 1 (sélection de la mémoire DMEM), met le signal RW à 1 (lecture de la mémoire) et fournit une adresse ADrw de lecture d'un mot Wi. Ces différents signaux sont bloqués par le circuit ASC1 qui est par défaut dans l'état IDL.

A l'apparition du front montant du signal CK1, la valeur à 1 du signal de sélection SEL provoque le basculement du circuit ASC1 dans l'état ASEARCH. Le circuit ASC1 met le signal SELF à 1, met le signal RWF à 1 et fournit à la mémoire DMEM une adresse ADF. Cette adresse ADF est l'adresse de l'attribut qui est associé à la zone mémoire sécurisée désignée par l'adresse ADrw, soit :

$$ADF = F // MSB(ADrw)$$

"F" étant l'adresse de la zone dédiée aux attributs (page P15 de la mémoire); "//" le symbole de la concaténation, MSB (ADrw) l'adresse de la page visée par la commande d'accès au mot Wi (Cf. Tableau 1).

Le circuit ASC1 met également le signal WAIT à 1, afin que les signaux SEL, RW, ADrw soient gelés au cycle d'horloge suivant.

A l'apparition du front montant du signal CK2, la mémoire DMEM est activée en lecture et fournit au circuit MAC l'attribut recherché AT(MSB(ADrw)), après écoulement du temps d'accès Tacc. Le circuit MAC reçoit également l'adresse ADrw et est en mesure de fournir le signal d'interdiction IT, ici un signal d'interruption, si la donnée visée par l'adresse ADrw n'est pas accessible en lecture.

Second cycle d'horloge

A l'apparition du front montant suivant du signal CK0, deux situations peuvent être rencontrées selon que le circuit MAC a fournit ou non le signal d'interruption au cours du cycle d'horloge précédent.

Dans le premier cas, le microprocesseur est envoyé dans un sous-programme d'interruption et relâche les signaux SEL, RW et ADrw malgré le fait que le signal WAIT soit à 1, de sorte que l'accès à la mémoire de données est neutralisé. Par exemple, le CPU positionne son compteur ordinal ("program counter") à une adresse-programme située dans une mémoire programme (non représentée sur les figures) où réside un sous-programme de gestion de l'interruption de forte priorité, qui provoque une remise à zéro software du CPU. Comme autre solution, le signal RESET de mise à zéro hardware peut être directement appliqué au CPU par le circuit MAC.

Dans le second cas, aucun signal d'interruption n'est émis et le microprocesseur maintient les signaux SEL, RW et ADrw car le signal WAIT est à 1.

A l'apparition du front montant suivant du signal CK1, le circuit ASC1 bascule alors dans l'état AMA de sorte que le signal ADF recopie l'adresse ADrw, les signaux RWF, SELF recopient les signaux RW, SEL et le signal WAIT est remis à 0.

A l'apparition du front montant suivant du signal CK2, la mémoire DMEM est alors activée en lecture et fournit le mot Wi visé par l'adresse ADrw, après écoulement du temps d'accès Tacc.

Troisième cycle d'horloge

A l'apparition du front montant suivant du signal CK0, le CPU peut exploiter cette donnée, à moins d'avoir été envoyé dans un sous programme d'interruption au cours du cycle précédent.

A l'apparition du front montant suivant du signal CK1, le circuit ASC1 retourne dans l'état IDL.

Une opération d'écriture de la mémoire comprend des étapes similaires, et ne se distingue de l'opération de lecture que par le fait que le CPU applique une donnée DT2 sur l'entrée DTIN de la mémoire et porte le signal RW à 0 au lieu de 1. Si, au terme du cycle de recherche de l'attribut (premier cycle d'horloge, circuit ASC1 dans l'état ASEARCH), il apparaît que la donnée fournie ne doit pas être écrite dans la mémoire de données, l'écriture de la donnée est empêchée comme précédemment, ce qui provoque le relâchement des signaux SEL, RW, ADrw au commencement du deuxième cycle d'horloge, avant que la mémoire ait le temps d'enregistrer la donnée.

Une alternative à ce moyen de blocage hardware en soi classique consiste à faire émettre par le circuit MAC un signal d'interdiction supplémentaire ISR ("Idle State Requested") qui est appliqué au circuit ASC1 et force celui-ci à revenir à l'état IDL, au lieu de basculer dans l'état AMA. Ainsi, le circuit ASC1 barre l'accès à la mémoire DMEM et le CPU ne peut y accéder. Ce type de blocage selon l'invention peut être combiné avec un blocage par interruption du type précédemment décrit. Ce type de blocage est également applicable lorsque l'organe qui sollicite l'accès à la mémoire de données mémoire n'est pas un circuit programmable, ou ne peut recevoir un signal d'interruption (par exemple un CPU distant demandant l'accès à la mémoire par l'intermédiaire de bornes de connexion externes).

Divers autres moyens pour empêcher la réalisation d'une opération interdite peuvent être prévus par l'homme de l'art.

En résumé, le stockage d'attributs selon le procédé de l'invention ne nécessite que la réservation d'une zone mémoire dans la mémoire de données, ou la prévision d'une zone mémoire supplémentaire dans la mémoire de données (à capacité de stockage de données constante). La surface de silicium occupée par le dispositif est nettement diminuée puisqu'il n'est plus nécessaire de prévoir une mémoire d'attributs avec ses décodeurs et ses amplificateurs de lecture.

D'autre part, la lecture des attributs et la lecture des données s'effectuent à des instants différents, de sorte que les pics de consommation de courant sont nettement diminués.

La contrepartie du mode de réalisation qui vient d'être décrit est que le temps d'accès au données est ralenti par l'ajout l'étape de recherche de l'attribut dans la mémoire de données, qui consomme un cycle d'horloge.

Bien que la perte d'un cycle d'horloge ne représente, toutes proportions gardées, qu'un faible ralentissement du fonctionnement du CPU (les opérations ultérieures de traitement. d'une donnée lue dans la mémoire pouvant représenter plusieurs cycles d'horloge), un objectif de la présente invention est ici d'optimiser le temps de recherche de l'attribut sans pénaliser le dispositif de façon excessive en termes d'encombrement.

**Deuxième mode de réalisation d'un dispositif de contrôle d'accès selon l'invention**

**Principes généraux**

La présente invention se fonde ici sur la constatation selon laquelle, lorsque le CPU réalise successivement plusieurs accès à la mémoire de données, les accès successifs concernent généralement la même zone mémoire et font donc intervenir le même attribut.

Ainsi, une idée de la présente invention est de stocker dans une mémoire cache au moins le dernier attribut lu dans la mémoire de données et, lorsqu'une une nouvelle commande d'accès est émise par le CPU, rechercher dans la mémoire cache l'attribut correspondant avant de le rechercher dans la mémoire de données.

Comme précédemment, et dans un souci de simplification de la présente description, on désigne par "recherche" une opération incluant la lecture de l'élément recherché si celui-ci est trouvé (ce qui est toujours le cas dans la mémoire de donnée, mais ne l'est pas nécessairement dans la mémoire cache).

Une telle mémoire cache peut ainsi mémoriser au moins un attribut, et de façon générale mémoriser un nombre d'attributs inférieur au nombre d'attributs présents dans la mémoire de données, et occupe une surface de silicium plus faible qu'une mémoire d'attributs classique.

Pour qu'une telle mémoire cache permette d'économiser le cycle d'horloge que nécessite la recherche de l'attribut dans la mémoire de données, la recherche de l'attribut dans la mémoire cache doit être rapide. Selon l'invention, cette recherche est exécutée de façon asynchrone entre le moment où apparaît le front montant du signal CK0, c'est-à-dire l'instant où le CPU fournit une commande d'accès, et le moment où apparaît le front montant du signal CK1, c'est-à-dire l'instant où le circuit ASC1 bascule dans l'état ASEARCH. Ainsi, si l'attribut est trouvé dans la mémoire cache avant l'apparition du front montant du signal CK1, il n'est pas nécessaire que le circuit ASC1 bascule dans l'état ASEARCH. Le circuit ASC1 peut directement basculer dans l'état transparent AMA.

A cet effet, la présente invention propose de prévoir une mémoire cache dépourvue des circuits de décodage classiques qui ne permettent pas d'effectuer rapidement une lecture asynchrone de la mémoire cache. Une telle mémoire cache comprend par exemple des points mémoire réalisés à partir de bascules logiques (bascule Flip-Flop, bascules D,...), et la recherche d'attribut dans la mémoire cache est assurée par un circuit asynchrone à logique câblée.

Encore une autre idée de l'invention permettant une lecture rapide de la mémoire cache sans décodage d'adresse, est d'enregistrer avec chaque attribut l'adresse de la zone mémoire sécurisée à laquelle l'attribut est associé. Ainsi, la recherche d'un attribut est faite en recherchant si l'adresse de la zone mémoire sécurisée visée par une commande d'accès se trouve dans la mémoire cache, et la lecture de l'attribut est faite en sélectionnant l'attribut associé à l'adresse de la zone mémoire sécurisée.

**Exemple de réalisation**

La figure 5 représente un deuxième mode de réalisation du dispositif de contrôle d'accès selon l'invention, mis en oeuvre au sein des mêmes éléments. On retrouve le CPU, la mémoire DMEM, le décodeur d'interruption ITDEC et le circuit CKGEN fournissant les signaux d'horloge CK0, CK1, CK2. On considère ici que la mémoire DMEM présente la structure décrite en relation avec la figure 4, et qu'elle comporte ainsi des données de 8 bits (mots W0-W15 ou attributs AT0-AT14) et est adressée sous 8 bits (adresse ADrw).

Le dispositif de contrôle d'accès comprend comme précédemment le circuit MAC et un circuit synchrone de recherche d'attribut, désigné ici ASC2, qui s'interpose entre le CPU et la mémoire de la manière déjà décrite pour le circuit ASC1 (Cf. Tableau 1).

Le dispositif de contrôle d'accès comprend en outre une mémoire cache comprenant un plan mémoire CMEM et un circuit CMC de gestion de la mémoire cache.

Le plan mémoire CMEM de la mémoire cache est formé de bascules logiques, par exemple des bascules D, dont la mise à jour est cadencée par les fronts montants du signal CK0. Un exemple de structure de ce plan mémoire sera décrit plus en détail dans ce qui suit.

La figure 6 représente un exemple d'organisation interne du plan mémoire CMEM. Celui-ci comprend par exemple 8 lignes de mot CWL0, CWL1,...CWLj,... CWL7 de 13 bits chacune. Chaque ligne de mot CWLj peut recevoir un attribut AT(CWLj) (8bits), l'adresse MSB(CWLj) de la page mémoire à laquelle l'attribut est associé (4 bits), et un drapeau indicateur IFj (1 bit) indiquant si la ligne de mot est utilisée ou non. Sur l'exemple représenté, le plan mémoire n'est pas plein et ne comprend que deux attributs AT2, AT5 correspondant respectivement aux pages P2, P5 de la mémoire de données, ainsi que les adresses MSB2, MSB5 des pages mémoire auxquelles ces attributs sont associés. La mémoire cache étant gérée à la manière d'une pile, comme cela sera décrit plus loin, les lignes de mot recevant ces deux attributs sont celles qui se trouvent au sommet du plan mémoire CMEM, soit les lignes de mot CWL0, CWL1 (la ligne CWL0 formant le sommet de la pile). Les drapeaux indicateurs IFj de ces lignes de mot sont à 1 (lignes utilisées) tandis que les drapeaux des autres lignes de mot sont à 0.

Comme représenté sur la figure 5, le circuit CMC de gestion de la mémoire cache comprend une entrée de données ATIN de 12 bits qui est d'une part connectée à la sortie DTOUT de la mémoire DMEM pour recevoir un attribut AT(MSB(ADrw)), et d'autre part est connectée à 4 fils de la sortie ADOUT du CPU pour recevoir les bits de poids fort MSB(ADrw) de l'adresse ADrw. Le circuit CMC comprend également une sortie ATOUT de 8bits fournissant un attribut au circuit MAC, et une sortie fournissant un signal ISINC ("Is In Cache") au circuit ASC2. Ce signal est par défaut à 0 et passe à 1 lorsqu'un attribut est trouvé dans la mémoire cache.

Le circuit CMC effectue les tâches suivantes :

- quand le signal SEL est à 1, la recherche asynchrone d'un attribut dans la mémoire cache, sans décodage d'adresse, et le cas échéant la lecture de cet attribut et sa fourniture sur la sortie ATOUT, et la mise à jour asynchrone du signal ISINC ("1" si l'attribut a été trouvé, sinon "0"),
- la mise à jour de la mémoire cache, quand le signal SEL est à 1 et à l'apparition d'un front montant du signal CK0. La mise à jour de la mémoire cache comprend :

- lorsque le signal ISINC est à 0, l'enregistrement au sommet de la pile d'un nouvel attribut AT(MSB(ADrw)) fourni par la mémoire de données (attribut non trouvé dans la mémoire cache et lu dans la mémoire de données par le circuit CMC), ainsi que l'enregistrement de l'adresse MSB(ADrw) de la zone mémoire correspondante, puis le décalage vers le bas des attributs se trouvant déjà dans la pile.
- lorsque le signal ISINC est à 1 (attribut trouvé dans la mémoire cache), le déplacement au sommet de la pile de l'attribut lu dans la mémoire cache, et le décalage vers le bas d'attributs de la pile se trouvant entre le sommet de la pile et l'emplacement d'origine de l'attribut lu dans la mémoire cache.

Ainsi, le dernier attribut utilisé, qu'il ait été trouvé ou non dans la mémoire cache, se retrouve toujours au sommet de la pile, et les attributs qui sont éjectés de la pile lors de l'enregistrement d'un nouvel attribut sont toujours les attributs les plus anciens. La mémoire cache ne comprend ainsi que les derniers attributs utilisés.

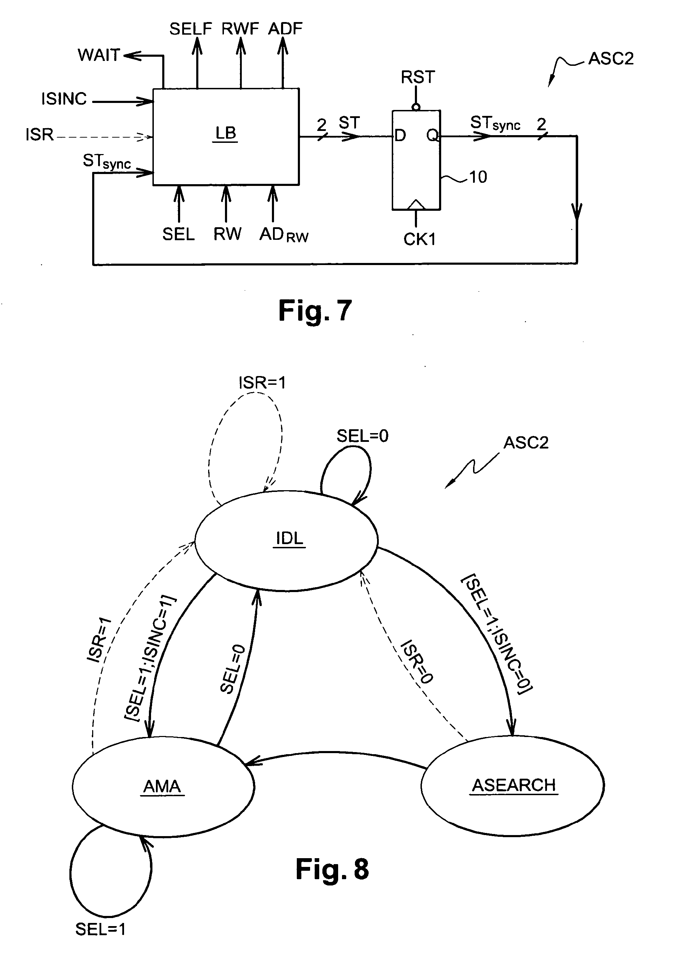

Le circuit ASC2 est une machine d'états dont un exemple de réalisation est représenté sur la figure 7. Le circuit ADC2 comprend un bloc logique LB et une bascule logique 10 pilotée par le signal CK1. Le bloc logique assure les transitions d'un état à l'autre et la bascule 10 assure la synchronisation des transitions d'états avec le signal CK1.

Le bloc logique LB comprend une sortie codée sur 2 bits fournissant l'état interne ST de la machine d'états, qui est reliée à une entrée D de la bascule 10, celle-ci étant par exemple formée de deux bascules D en parallèle. La bascule 10 reçoit sur une entrée d'horloge le signal CK1, sur une entrée de remise à zéro un signal RST fourni par le CPU, et fournit sur une sortie Q un état synchronisé STsync qui recopie l'état ST à chaque front montant du signal CK0 et qui est renvoyé sur une entrée du bloc logique LB.

Le bloc logique LB comprend également des entrées recevant les signaux de commande d'accès SEL, RW, ADrw fournis par le CPU, une entrée recevant le signal ISINC fourni par le circuit CMC, et des sorties fournissant les signaux filtrés SELF, RWF, ADF et le signal WAIT. Optionnellement et comme représenté par des traits pointillés, le bloc logique LB comprend également une entrée recevant un signal d'interdiction ISR fourni par le circuit MAC.

La figure 8 est un diagramme d'états représentant trois états internes du circuit ASC2. Ces états sont identiques à ceux du circuit ASC1 et comprennent l'état IDL, l'état ASEARCH, et l'état AMA. Le circuit ASC2 se distingue du circuit ASC1 par les conditions de transition entre ces états, qui dépendent ici du signal ISINC.

Ainsi, le circuit ASC2 reste dans l'état IDL tant que le signal SEL reste à 0. Une transition de l'état IDL vers l'état ASEARCH est prévue quand SEL=1 et ISINC=0. Une transition de l'état IDL vers l'état AMA est prévue quand SEL=1 et ISINC=1. Une transition automatique de l'état ASEARCH vers l'état AMA est prévue, à l'apparition d'un front montant du signal CK0. Une transition de l'état ASEARCH ou de l'état AMA vers l'état IDL est prévue quand SEL=0.

Optionnellement, une transition prioritaire de l'état ASEARCH vers l'état IDL peut être prévue quand le signal ISR passe à 1. Le signal ISR force alors le circuit ASC2 à revenir dans l'état IDL, afin d'empêcher l'écriture ou la lecture d'une donnée dans la mémoire de données. Dans ce cas, le maintien forcé dans l'état IDL est également prévu quand le signal ISR est à 1, pour empêcher le circuit ASC2 de basculer dans l'état AMA quand SEL=1 et ISINC=1.

Ainsi, le circuit ASC2 se distingue principalement du circuit ASC1 par le fait que si le signal ISINC est à 1 lorsque le front du signal CK1 intervient, le circuit ASC2 peut basculer directement de l'état IDL à l'état AMA où il est transparent vis-à-vis d'une commande appliquée par le CPU. Cela signifie que le circuit CMC a trouvé l'attribut recherché dans le plan mémoire de la mémoire cache (ISINC=1) et qu'il n'est pas nécessaire de basculer dans l'état ASEARCH pour rechercher l'attribut. Dans ce cas, la commande envoyée par le CPU est exécutée au cours du premier cycle d'horloge, au lieu d'être exécutée au cours du cycle d'horloge suivant.

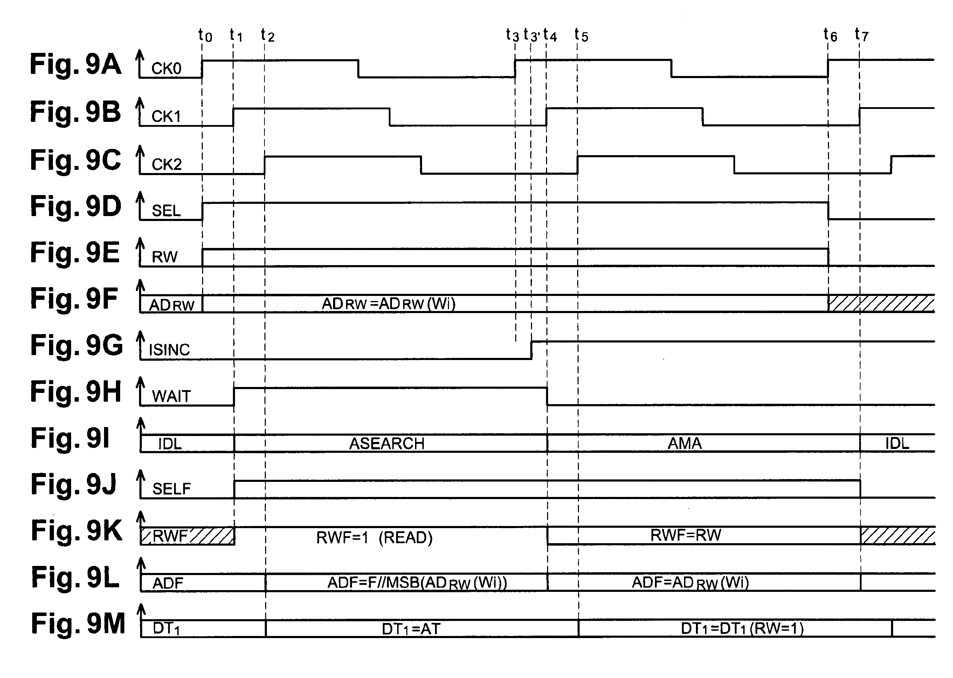

Le fonctionnement du circuit ASC2 sera mieux compris en se référant aux chronogrammes représentés sur les figures 9A à 9M, qui illustrent l'exécution d'une commande de lecture de la mémoire de données, au cours de laquelle l'attribut n'est pas trouvé dans la mémoire cache et doit être recherché dans la mémoire de données.

Les figures 9A, 9B, 9C représentent respectivement les signaux CK0, CK1, CK2. La figure 9D représente le signal SEL fourni par le CPU. La figure 9E représente le signal RW fourni par le CPU. La figure 9F représente l'adresse ADrw fournie par le CPU. La figure 9G représente le signal ISINC fourni par le circuit CMC. La figure 9H représente le signal WAIT fourni par le circuit ASC2. La figure 9I représente l'état interne du circuit ASC2. La figure 9J représente le signal de sélection filtré SELF fourni par le circuit ASC2. La figure 9K représente le signal filtré RWF fourni par le circuit ASC2. La figure 9L représente l'adresse filtrée ADF fournie par le circuit ASC2. La figure 9M représente des données DT1 lues dans la mémoire DMEM.

Premier cycle d'horloge

A un instant t0 correspondant à un front montant du signal CK0, le CPU met les signaux RW et SEL à 1 et fournit l'adresse ADrw d'un mot Wi à lire dans la mémoire DMEM. Le passage à 1 du signal SEL active le circuit CMC qui recherche alors dans le plan mémoire CMEM un attribut correspondant à la page contenant le mot Wi visé par l'adresse ADrw. A cet effet le circuit CMC compare les adresse de pages MSB(CWLj) présentes dans les lignes de mot CWLj de la mémoire cache avec les bits de poids fort MSB(ADrw) de l'adresse ADrw. Le signal ISINC reste ici à 0 après l'instant t0, ce qui signifie que le résultat de la comparaison est négatif et que l'attribut recherché ne se trouve pas dans la mémoire cache (le signal ISINC étant par défaut à 0).

A un instant t1 correspondant à un front montant du signal CK1, le circuit ASC2 bascule dans l'état ASEARCH car le signal SEL est à 1 et le signal ISINC est à 0. Le circuit ASC2 met les signaux WAIT, SELF, et RWF à 1, et fournit à la mémoire de données une adresse ADF correspondant à l'adresse de l'attribut recherché, soit ADF = F // MSB (ADrw).

A un instant t2 correspondant à un front montant du signal CK2, la mémoire de données est activée puis fournit une donnée DT1 égale à l'attribut recherché, soit DT1= AT(MSB(ADrw)), après écoulement du temps d'accès Tacc (non représenté sur les figures dans un souci de simplicité).

Deuxième cycle d'horloge

A un instant t3 correspondant à un front montant suivant du signal CK0, la mémoire cache est mise à jour automatiquement car le signal ISINC est à 0. L'attribut AT(MSB(ADrw)) fourni par la mémoire de données est fournit au circuit MAC et est simultanément enregistré au sommet de la pile, avec l'adresse MSB(ADrw) de la zone mémoire correspondante.

Le signal SEL étant toujours à 1 après la mise à jour de la mémoire cache, le circuit CMC recherche de nouveau dans le plan mémoire CMEM de la mémoire cache un attribut correspondant à l'adresse ADrw. Cet attribut est maintenant trouvé puisqu'il vient d'être enregistré dans la mémoire cache, de sorte que le signal ISINC passe à 1 à un instant t3' suivant presque immédiatement l'instant t0, imposé par le temps de propagation asynchrone des signaux logiques dans le circuit CMC.

A un instant t4 correspondant à un front montant suivant du signal CK1, et en supposant ici que le circuit MAC n'a pas mis à 1 le signal d'interdiction ISR, le circuit ASC2 bascule dans l'état transparent AMA. L'adresse ADF recopie l'adresse ADrw du mot à lire, le signal SELF recopie le signal SEL et reste à 1, le signal WAIT repasse à 0, le signal RWF recopie le signal RW et reste donc ici à 1 (accès en lecture demandé par le CPU).

A un instant t5 correspondant à un front montant suivant du signal CK2, la mémoire de données est activée puis fournit, après écoulement du temps d'accès Tacc, une donnée DT1 égale au mot Wi dont l'accès en lecture est demandé par le CPU.

Troisième cycle d'horloge

A un instant t6 correspondant à un front montant suivant du signal CK0, le CPU remet à 0 le signal SEL et peut traiter le mot Wi. A un instant t7 correspondant à un front montant suivant du signal CK1, le circuit ASC2 retourne à l'état IDL.

A l'instant t6, le CPU peut toutefois souhaiter un nouvel accès à la mémoire de données. Dans ce cas, le CPU laisse le signal SEL à 1. Le circuit ASC2 ne revient pas à l'état IDL à l'instant t7, mais bascule dans l'état ASEARCH ou AMA (selon que l'attribut correspondant se trouve ou non dans la mémoire cache).

Comme indiqué plus haut, la présente invention repose ici sur le fait que des accès successifs à la mémoire de données concernent le plus souvent la même zone mémoire, de sorte que l'attribut recherché sera, dans la plupart des cas, trouvé dans la mémoire cache. La séquence qui vient d'être décrite sera donc rarement déclenchée, sauf lorsque les premières commandes seront appliquées à la mémoire de données, car la mémoire cache sera vide et devra progressivement se remplir.

Il va de soi que la prévision d'une mémoire cache pouvant recevoir plusieurs attributs permet de couvrir plusieurs séquences d'accès successifs à plusieurs zones mémoire. En pratique, la taille de la mémoire cache sera choisie en fonction du compromis préféré entre la surface occupée par la mémoire cache et la vitesse d'exécution des commandes d'accès, la vitesse moyenne d'exécution d'une commande d'accès étant inversement proportionnelle à la probabilité de trouver l'attribut pertinent dans la mémoire cache.

On décrira maintenant plus en détail un exemple de réalisation du plan mémoire CMEM et du circuit CMC de gestion de la mémoire cache.

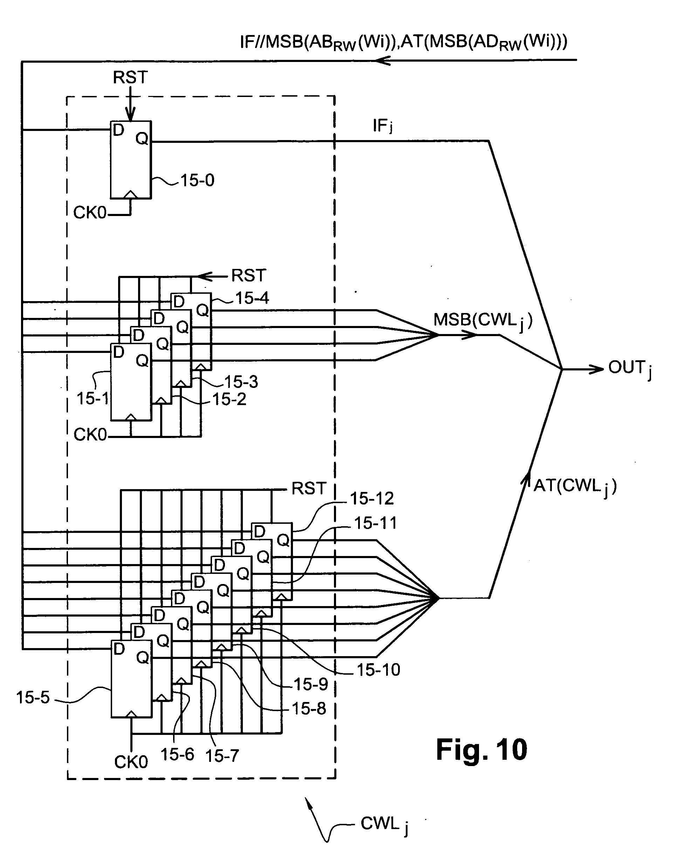

La figure 10 représente la structure d'une ligne de mot CWLj quelconque du plan mémoire de la mémoire cache, dans laquelle est enregistré un attribut AT(CWLj), ainsi que les 4 bits d'adresse de poids fort MSB(CWLj) de la page mémoire à laquelle correspond l'attribut, et le drapeau indicateur IFj.

La ligne de mot CWLj comprend 13 bascules 15-0 à 15-12 de type D, recevant chacune un bit. La bascule 15-0 reçoit le drapeau indicateur IFj, les bascules 15-1 à 15-4 reçoivent les 4 bits de l'adresse MSB(CWLj), et les bascules 15-5 à 15-12 reçoivent l'attribut AT(CWLj).

La ligne de mot CWLj présente une entrée INj de 13 bits dont chaque fil est relié à une entrée D de l'une des bascules 15, et une sortie OUTj de 13 bits dont chaque fil est relié à une sortie Q de l'une des bascules 15. Chaque bascule 15 reçoit sur une entrée de synchronisation le signal CK0, et recopie sur sa sortie Q le bit présent sur son entrée D, lorsque le signal CK0 présente un front montant. Lorsqu'un mot de 13 bits composé des éléments concaténés IFj, MSB(ADrw), et AT(MSB(ADrw)) est appliqué sur l'entrée INj d'une ligne de mot CWLj, ce mot est enregistré par la ligne de mot lors du front montant du signal CK0. Les éléments formant le mot enregistré dans une ligne de mot CWLj sont désignés MSB(CWLj) et AT(CWLj) pour les distinguer des éléments entrant MSB(ADrw) et AT(MSB(ADrw)).

Chaque bascule 15 reçoit également sur une entrée de remise à 0 le signal RST fourni par le CPU. Ainsi, lorsque le CPU met ce signal à 1, la mémoire cache est vidée de son contenu et le circuit de recherche d'attribut ACS2 est également remis à zéro (fig.7).

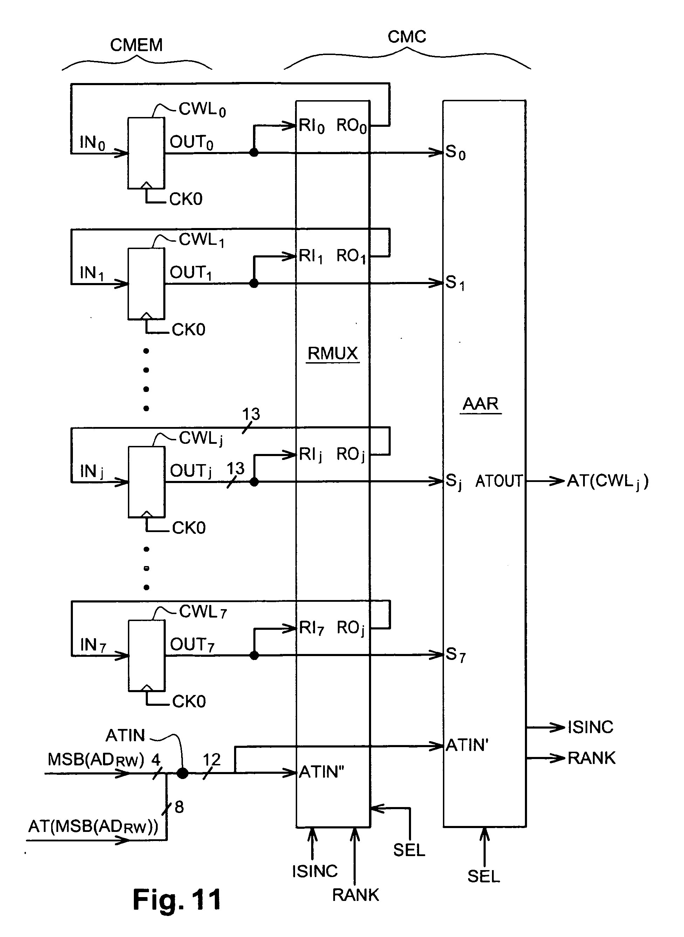

La figure 11 représente l'architecture générale du circuit CMC, les lignes de mot CWLj (CWL0, CWL1,...CWL7) de la mémoire cache étant représentées sous la forme de blocs présentant chacun une entrée INj (IN0 à IN7) et une sortie OUTj (OUT0 à OUT7).

Le circuit CMC comprend un circuit asynchrone AAR de recherche d'attribut dans la mémoire cache et un circuit RMUX de mise à jour de la mémoire cache.

Le circuit AAR comprend des entrées Sj (S0, S1,...S7), une entrée recevant le signal SEL fourni par le CPU, et une entrée ATIN' reliée à l'entrée ATIN du circuit CMC. L'entrée ATIN de 14 bits, déjà décrite plus haut, est connectée à la mémoire de données DMEM et à la sortie ADOUT du CPU. Elle permet au circuit AAR de recevoir un nouvel attribut AT(MSB(ADrw)) lu dans la zone dédiée (page P15) de la mémoire de données, et de recevoir l'adresse MSB (ADrw) de la page mémoire à laquelle cet attribut est associé, formée par les 4 bits de poids fort de l'adresse ADrw fournie par le CPU.

Chaque entrée Sj du circuit AAR est connectée à la sortie OUTj (OUT1, OUT1,... OUT7) de la ligne de mot CWLj de même rang de la mémoire cache. Le circuit AAR présente également une sortie fournissant le signal ISINC déjà décrit, et un signal RANK indiquant, lorsqu'un attribut est trouvé dans la mémoire cache, le rang de la ligne de mot (ici de 0 à 7) dans laquelle cet attribut a été trouvé.

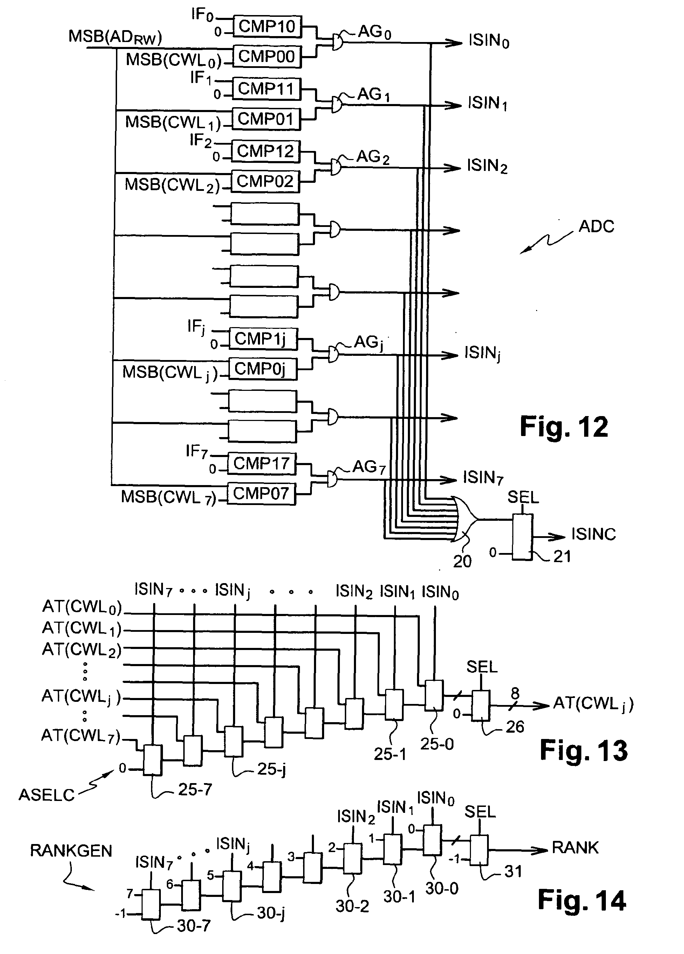

Le circuit AAR comprend un circuit ADC de détection d'attribut dont un exemple de réalisation est représenté sur la figure 12.

Ce circuit ADC comprend une première série de comparateurs CMP0j (CMP00, CMP01,....CMP07) pour comparer les adresses MSB(CWLj) présentes dans les lignes de mot CWLj de la mémoire cache et l'adresse MSB (ADrw) présente sur l'entrée ATIN'. Chaque comparateur CMP0j reçoit sur une entrée l'adresse MSB(CWLj) enregistrée dans la ligne de mot CWLj de rang correspondant, et sur une autre entrée l'adresse MSB(ADrw). Si l'une des adresses présentes dans la mémoire cache correspond à l'adresse de la zone mémoire sécurisée visée par la commande d'accès, la sortie du comparateur correspondant passe à 1.

Le circuit ADC comprend également une seconde série de comparateurs CMP1j (CMP10, CMP11,....CMP17) pour tester les drapeaux indicateurs IFj (IF0, IF1...IF7), chaque comparateur recevant un drapeau IFj sur une entrée et la valeur logique 1 sur une autre entrée. Si l'un des drapeaux présents dans la mémoire cache est égal à 1, la sortie du comparateur correspondant passe à 1.

Les sorties des comparateurs M0j M1j de même rang sont combinées dans une porte logique AGj (AG0, AG1....AG7) de type ET, dont la sortie fournit un signal ISINj (ISIN0, ISIN1,...ISIN7). Ce signal passe à 1 si l'adresse présente dans la ligne de mot de même rang correspond à l'adresse de la zone mémoire sécurisée visée par la commande d'accès, et si le drapeau indicateur IFj est à 1.

Les différents signaux ISIN0, ISIN1,...ISIN7 fournis par les portes logiques AG0, AG1....AG7 sont envoyés sur les entrées d'une porte 20 de type OU dont la sortie est appliquée sur une entrée d'un multiplexeur 21 dont la sortie fournit le signal ISINC. Le multiplexeur 21 reçoit sur une autre entrée la valeur logique 0 et est piloté par le signal SEL. Il sélectionne la sortie de la porte 20 lorsque le signal SEL=1.

Le circuit AAR comprend également un circuit ASELC de sélection d'attribut, dont un exemple de réalisation est représenté sur la figure 13.

Le circuit ASELC comprend un groupe de multiplexeurs 25-j en cascade (25-0 à 25-7). Chaque multiplexeur de rang j reçoit sur une première entrée la sortie du multiplexeur suivant 25-(j+1), reçoit sur une deuxième entrée l'attribut AT(CWLj) se trouvant dans la ligne de mot CWLj de même rang de la mémoire cache, et reçoit sur une entrée de commande le signal ISINj de même rang j.

Le dernier multiplexeur, ici le multiplexeur 25-7, reçoit sur sa première entrée la valeur logique 0. Le premier multiplexeur 25-0 a sa sortie connectée à l'entrée d'un multiplexeur 26 piloté par le signal SEL et recevant sur son autre entrée la valeur logique 0.

Lorsque le signal SEL est à 1, le multiplexeur 26 fournit l'attribut sélectionné par le groupe de multiplexeurs 25-j, choisi dans une ligne de mot CWLj. L'attribut est sélectionné dans la ligne de mot dont le rang est désigné par le signal ISINj qui est à 1 parmi les signaux ISINO à ISIN7 Si un attribut recherché ne se trouve pas dans la mémoire cache, tous les signaux ISINj sont à 0 et la sortie du multiplexeur 26 reste à 0 lorsque le signal SEL passe à 1.

Le circuit AAR comprend également un circuit RANKGEN dont un exemple de réalisation est illustré en figure 14. Ce circuit fournit le signal RANK qui indique le rang de l'attribut sélectionné, ce signal étant utilisé par le circuit RMUX pour déterminer l'attribut devant être placé au sommet de la pile. Le circuit RANKGEN comprend un groupe de multiplexeurs 30-j en cascade (30-0 à 30-7). Chaque multiplexeur de rang j reçoit sur une première entrée la sortie du multiplexeur de rang suivant 30-(j+1), sur une deuxième entrée un nombre binaire j égal au rang du multiplexeur (soit ici 0 à 7), et sur une entrée de commande le signal ISINj de même rang j.

Le dernier multiplexeur, ici le multiplexeur 30-7, reçoit sur la première entrée un nombre binaire égal à -1. Le premier multiplexeur 30-0 a sa sortie connectée à l'entrée d'un multiplexeur 31 piloté par le signal SEL, recevant sur son autre entrée un nombre binaire égal -1.

Lorsque le signal SEL est à 1, le multiplexeur 31 fournit le signal RANK. Ce signal est égal au rang j du signal ISINj qui est à 1 parmi les signaux ISINO à ISIN7. Si un attribut recherché ne se trouve pas dans la mémoire cache et que tous les signaux ISINO à ISIN7 restent égaux à 0, le signal RANK est égal à -1.

En revenant maintenant à la figure 11, le circuit RMUX comprend des entrées RIj (RIO à RI7) et des sorties ROj (RO0 à RO7). Chaque entrée RIj est connectée à la sortie OUTj (OUT0 à OUT7) de la ligne de mot CWLj de même rang de la mémoire cache. Chaque sortie ROj est connectée à l'entrée INj (IN0 à IN7) de la ligne de mot CWLj de même rang de la mémoire cache. Le circuit RMUX comporte également une entrée ATIN", une entrée recevant le signal RANK, une entrée recevant le signal ISINC et une entrée recevant le signal SEL. L'entrée ATIN" est reliée à l'entrée ATIN du circuit CMC, pour recevoir un nouvel attribut AT(MSB(ADrw)) ainsi que l'adresse MSB(ADrw) de la page mémoire à laquelle cet attribut est associé.

Le circuit RMUX assure la mise à jour de la mémoire cache en fonction de la valeur du signal ISINC. La mise à jour de la mémoire cache s'effectue lors du rafraîchissement des bascules formant les lignes de mot CWLj, lorsque le signal CK0 présente un front montant, le circuit RMUX se bornant à interconnecter les entrées et les sorties des lignes de mot CWLj d'une manière appropriée.

Le circuit RMUX est réalisé en logique câblée à partir d'un code RTL ("Register Transfer Level") prévu pour la génération de circuits logiques. Ce code comprend par exemple les séquences de mise à jour suivantes :

Séquence de mise à jour N°1 :

    Si SEL=1 et ISINC=0 :

    (1) ROO=ATIN"
    (2) IF0=1
    (3) Pour j allant de 1 à 7
    (4) Tant que IFj=1
    (5) ROj=RIj-1

L'égalité de la ligne (1) signifie que la sortie ROO est reliée à l'entrée ATIN" pour l'enregistrement dans la première ligne de mot CWL0 (sommet de la pile) de l'attribut externe AT((MSB(ADrw)) et de l'adresse (MSB(ADrw)) de la page mémoire à laquelle l'attribut est associé. L'égalité de la ligne (2) signifie que le drapeau indicateur de la ligne CWL0 est mis à 1. L'égalité de la ligne (5) signifie que toutes les autres lignes de mot utilisées (IFj=1) sont décalées vers de bas, chaque sortie de rang j étant connectée à l'entrée de rang j-1 correspondante.

Séquence de mise à jour N°2

    Si SEL=1, ISINC=1, RANK > 0 (soit RANK ≠ -1 et RANK ≠ 0) :

    (1) Pour j = RANK
    (2) RO0=RIj
    (3) pour j allant de 0 à RANK-1
    (4) R0j+1=RIj

L'égalité de la ligne (2) signifie que l'attribut trouvé dans une ligne de mot de rang j est remonté au sommet de la pile, dans la ligne de mot CWL0, en connectant la sortie ROO à l'entrée RIj de rang j=RANK. L'égalité de la ligne (4) signifie que toutes les lignes de mot se trouvant entre le sommet de la pile et la ligne de mot où a été trouvé l'attribut sont décalées vers le bas.

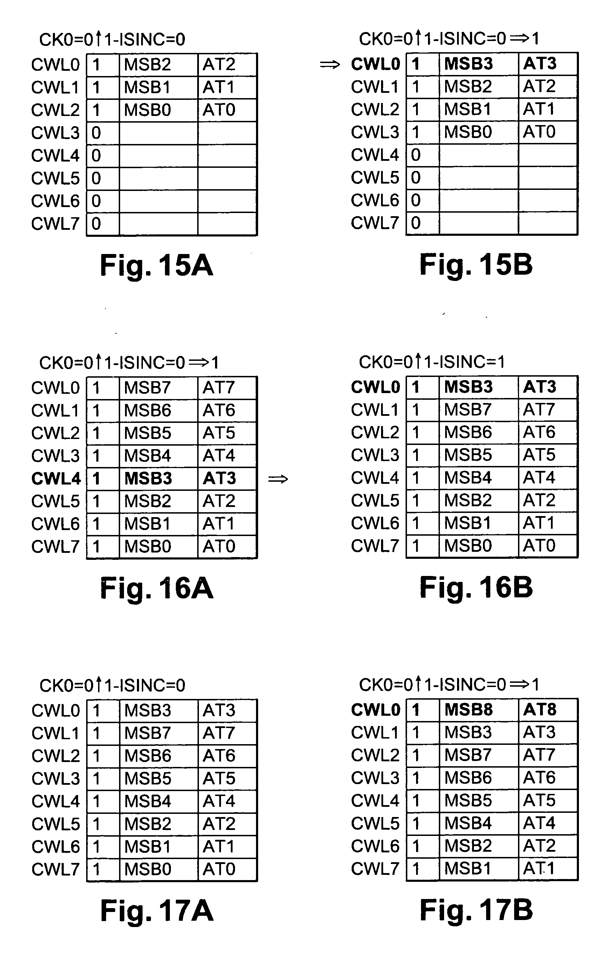

Les figures 15A, 15B, 16A, 16B, 17A et 17B illustrent des exemples de mise à jour de la mémoire cache par le circuit RMUX.

Exemple 1 de mise à jour, mémoire cache partiellement remplie

La figure 15A représente le contenu de la mémoire cache à l'apparition d'un front montant du signal CK0, au moment où un attribut AT3, correspondant à une page sécurisée d'adresse MSB3, est recherché dans la mémoire cache. L'adresse MSB3 n'est pas trouvée dans la mémoire cache et le signal ISINC reste à 0.
La figure 15B représente le contenu de la mémoire cache à l'apparition du front montant suivant du signal CK0, après que le circuit ASC2 a lu l'attribut AT3 dans la mémoire de données, à l'adresse F//MSB3. L'attribut AT3 est enregistré dans la première ligne de mot CWL0 avec l'adresse de page sécurisée MSB3. Les autres attributs présents dans la mémoire cache sont décalés vers le bas.

Exemple 2 de mise à jour, mémoire cache pleine

La figure 16A représente le contenu de la mémoire cache à l'apparition d'un front montant du signal CK0, au moment où l'attribut AT3, correspondant à une page sécurisée d'adresse MSB3, est de nouveau recherché dans la mémoire cache. L'adresse MSB3 est trouvée dans la ligne de mot CWL4 de la mémoire cache (RANK=4) et l'attribut AT3 est fourni au circuit MAC par le circuit de gestion de la mémoire cache. Le signal ISINC passe donc à 1.
La figure 16B représente le contenu de la mémoire cache à l'apparition du front montant suivant du signal CK0. Comme le signal ISINC est à 1, la mémoire cache est réorganisée. L'attribut AT3 est enregistré dans la première ligne de mot CWL0 avec l'adresse de page sécurisée correspondante MSB3. Les attributs présents dans les lignes de mots CWL0 à CWL3(j allant de 1 à RANK-1) sont décalés vers les lignes de rang immédiatement inférieur.

Exemple 3 de mise à jour, mémoire cache pleine

La figure 17A représente le contenu de la mémoire cache à l'apparition d'un front montant du signal CK0, au moment où un attribut AT8, correspondant à une page sécurisée d'adresse MSB8, est recherché dans la mémoire cache. L'adresse MSB8 n'est pas trouvée dans la mémoire cache et le signal ISINC reste à 0.
La figure 17B représente le contenu de la mémoire cache à l'apparition du front montant suivant du signal CK0, après que le circuit ASC2 a lu l'attribut AT8 dans la mémoire de données, à l'adresse F//MSB8. L'attribut AT8 est enregistré dans la première ligne de mot CWL0 avec l'adresse de page sécurisée MSB8. Les autres attributs présents dans la mémoire cache sont décalés vers les lignes de rang immédiatement inférieur. L'attribut AT0 qui se trouvait dans la dernière ligne de mot de la mémoire cache avant la mise à jour (fig. 17A) est éjecté et est remplacé par celui qui se trouvait dans l'avant-dernière ligne de mot CWL6.
En définitive, la mémoire cache selon l'invention est ici une mémoire cache ordonnée, du fait qu'elle ne contient pas tous les attributs disponibles dans la mémoire de données, ce qui permet d'éjecter les attributs les plus anciens (en termes de date de dernière utilisation et non de date de mémorisation dans la mémoire cache).
Le temps de recherche d'un attribut dans la mémoire cache est court et est uniquement déterminé par le temps de propagation des signaux logiques dans le circuit ADC, pour la mise à 1 de l'un des signaux ISINj, et le temps de propagation des signaux logiques dans le circuit ASELC, pour la sélection de l'attribut désigné par le signal ISINj qui est à 1. Ces opérations de recherche par comparaison de valeurs et de lecture par sélection d'un attribut, ne font donc intervenir aucun décodeur d'adresse et aucun amplificateur de lecture, et consomment très peu de courant (le courant consommé par des commutations de portes logiques étant très faible).
Par ailleurs, la surface de silicium occupée par le circuit CMC est nettement inférieure à celle occupée par les décodeurs et amplificateurs de lecture d'une mémoire d'attributs ayant un plan mémoire de type EEPROM, FLASH, ROM, etc..
Ainsi, la prévision d'une mémoire cache ne constitue pas un handicap qui supprimerait l'avantage qui résulte de la suppression de la mémoire d'attributs et de l'agencement des attributs dans une zone dédiée de la mémoire de données.
De plus, si l'on souhaite donner la priorité à l'encombrement du dispositif plutôt qu'à la vitesse d'exécution des commandes d'accès, la mémoire cache peut être réduite à une seule ligne de mot.

**Troisième mode de réalisation d'un dispositif de contrôle d'accès selon l'invention**

Une mémoire cache selon l'invention peut également être mise en oeuvre dans un dispositif de contrôle d'accès utilisant une mémoire d'attributs distincte de la mémoire de données. L'intérêt de la mémoire cache est alors de diminuer les pics de consommation électrique intervenant lors de la lecture d'attributs dans la mémoire d'attributs.

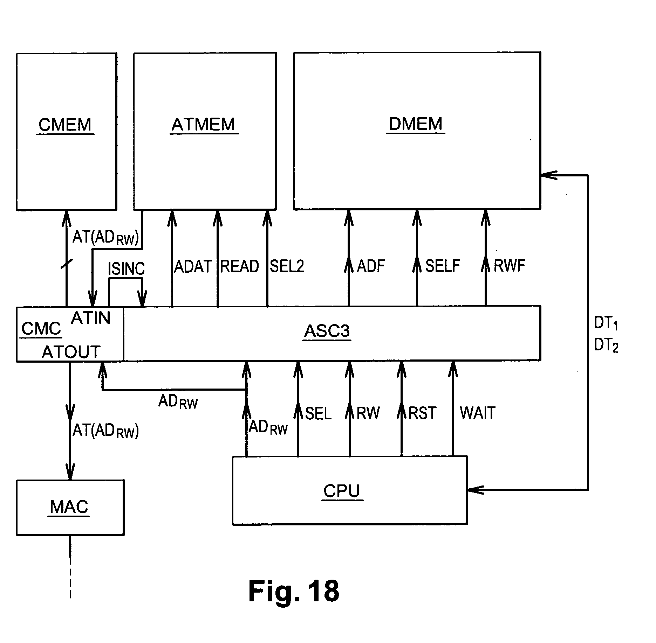

La figure 18 illustre un tel mode de réalisation. On y retrouve les éléments déjà décrits, à savoir la mémoire de données DMEM, le CPU, le circuit MAC, la mémoire cache comprenant le plan mémoire CMEM et le circuit de gestion CMC. On y retrouve également un circuit synchrone de recherche d'attribut selon l'invention, désigné ici ASC3.

Ici, les attributs sont stockés dans une mémoire d'attributs ATMEM. Ainsi, lorsqu'un attribut recherché n'est pas trouvé dans la mémoire cache, le circuit ACS3 recherche l'attribut dans la mémoire ATMEM au lieu de le rechercher dans la mémoire DMEM. A cet effet, le circuit ASC3 fournit à la mémoire ATMEM un signal de sélection SEL2, un signal de lecture READ et une adresse d'attribut ADAT qui est calculée à partir de l'adresse ADrw fournie par le CPU. Pendant la lecture de l'attribut dans la mémoire ATMEM, les signaux filtrés ADF, SELF, RWF fournis par le circuit ASC3 à la mémoire DMEM sont maintenus à leur valeur par défaut.

**Autres variantes de la présente invention**

La présente invention est susceptible de diverses autres variantes et modes de réalisation.

On a décrit dans ce qui précède les signaux essentiels intervenant dans un contrôle d'accès. Toutefois, et comme indiqué au préambule, d'autres informations peuvent être prises en compte par le circuit MAC pour déterminer les autorisations d'accès, par exemple le mode de fonctionnement du CPU (mode "utilisateur", mode "système d'exploitation", mode "test", etc.). Ces informations sont communiquées au circuit MAC sous la forme de signaux envoyés par le CPU ou sous la forme de drapeaux internes du CPU accessibles au circuit MAC.

Par ailleurs, bien que l'on ait décrit dans un souci de clarté de la description le circuit de recherche d'attribut et le circuit de gestion de la mémoire cache comme des circuits distincts, ces circuits peuvent être fusionnés en un seul circuit de gestion des attributs intégrant les fonctionnalités de ces deux circuits, les fonctionnalités du circuit MAC pouvant également y être intégrées.

Les zones mémoire sécurisées, au lieu d'être des pages de la mémoire de données, peuvent être des secteurs comprenant une pluralité de pages, ou inversement des portions de pages. La conversion d'une adresse de zone mémoire sécurisée en une adresse d'attribut peut être plus complexe que celle décrite précédemment, et faire intervenir une table de conversion faisant le lien entre l'adresse fournie par le CPU et l'adresse de l'attribut correspondant.

Enfin, les commandes d'accès envoyées à la mémoire de données ne sont pas nécessairement émises par une unité centrale de microprocesseur. Il peut s'agir de commandes délivrées par tout type d'élément, notamment un séquenceur à logique câblée, ou de commandes externes reçues par des bornes d'entrée/sortie du circuit intégré.

On a décrit dans ce qui précède trois modes de réalisation d'un dispositif de contrôle d'accès selon l'invention. Le premier mode de réalisation comprend des attributs stockés dans la mémoire de données et un circuit synchrone de recherche d'attribut dans la mémoire de données. Le second mode de réalisation comprend une mémoire cache selon l'invention, un circuit asynchrone de recherche d'attribut dans la mémoire cache, des attributs stockés dans la mémoire de données et un circuit synchrone de recherche d'attribut dans la mémoire de données. Le troisième mode de réalisation comporte une mémoire cache selon l'invention, un circuit asynchrone de recherche d'attribut dans la mémoire cache, une mémoire d'attributs distincte de la mémoire de données et un circuit synchrone de recherche d'attribut dans la mémoire d'attributs.

Ce troisième mode de réalisation présente une moindre optimisation en termes d'encombrement car la surface de silicium occupée par la mémoire cache n'est pas compensée par la suppression de la mémoire d'attributs. Ce mode de réalisation peut toutefois présenter un intérêt avec les mémoires de données de grande taille ouvertes à un grand nombre d'utilisateurs et comprenant un grand nombre de zones mémoire sécurisées (par exemple des mémoires multi-applications). Dans ce cas, la recherche d'un attribut pour une demande d'accès émise par un utilisateur déterminé peut être faite dans la mémoire cache pendant que la mémoire est accédée par un autre utilisateur. L'intérêt de la mémoire cache est alors une diminution du courant consommé pour lire les attributs, diminution pouvant être importante quand la mémoire est constamment soumise à des commandes d'accès.

Enfin, une mémoire cache selon l'invention est susceptible de diverses autres variantes et applications.

En ce qui concerne les variantes, il entre notamment dans le cadre de la présente invention de prévoir une mémoire cache pouvant contenir tous les attributs et se mettant à jour au fur et à mesure que des accès mémoire nécessitent la lecture d'attributs dans la mémoire de données (ou dans la mémoire d'attributs), ou de prévoir une mémoire cache pouvant contenir tous les attributs et mise à jour à la mise sous tension du circuit intégré.

Une telle mémoire cache présente des avantages en termes de consommation électrique et de vitesse de lecture. De plus, si la mémoire cache contient tous les attributs, il n'est pas nécessaire de la réorganiser cycliquement comme décrit plus haut, en plaçant le dernier attribut utilisé au sommet de la mémoire cache, puisque aucun attribut n'est éjecté de la mémoire cache pendant et après la phase de mise à jour.

En ce qui concerne les applications, le principe même d'une lecture asynchrone de la mémoire cache par recherche d'une adresse correspondant à l'attribut est exploitable dans d'autres applications que celle décrite ci-dessus. De façon générale, une mémoire cache selon l'invention contient des données de base (des attributs dans l'application susdécrite) et des étiquettes attachées aux données de base (des adresses de zone sécurisées dans l'application susdécrite). La recherche d'une donnée de base dans la mémoire cache comprend le fait de comparer les étiquettes avec une étiquette de référence attachée à la donnée de base recherchée, et d'extraire de la mémoire la donnée de base dont l'étiquette correspond à l'étiquette de référence.

Comme cela ressort de ce qui précède, le terme "circuit synchrone de recherche d'attribut" est utilisé dans la présente demande et dans les revendications pour désigner un circuit de recherche d'attribut dont le fonctionnement interne est cadencé par un signal d'horloge (ici une machine d'états cadencée par le signal CK1), tandis que le terme "circuit asynchrone de recherche d'attribut" est utilisé pour désigner un circuit de recherche d'attribut dont le fonctionnement interne n'est pas cadencé par un signal d'horloge, la fourniture du résultat ne dépendant que du temps de propagation des signaux électriques ou logiques dans les éléments constitutifs du circuit asynchrone.

**Revendications**

1. Mémoire cache à lecture rapide, **caractérisée en ce qu'**elle comprend :

   - un plan mémoire (CMEM) comprenant des lignes de mot (CWLj) prévues chacune pour enregistrer une donnée comprenant une donnée de base (AT(CWLj)) et une étiquette (MSB(CWLj)) associée à la donnée de base, et
   - un circuit (CMC) de gestion de la mémoire cache, comprenant un circuit asynchrone (AAR) de lecture de la mémoire cache, à logique câblée et sans décodeur d'adresse, agencé pour recevoir en entrée une étiquette de référence (MSB(ADrw)), pour comparer simultanément toutes les étiquettes présentes dans la mémoire cache relativement à l'étiquette de référence et, si une étiquette est identique à l'étiquette de référence, sélectionner la donnée de base associée à l'étiquette identique et la fournir sur une sortie (ATOUT) du circuit de lecture.

2. Mémoire cache selon la revendication 1, dans laquelle le circuit de gestion (CMC) de la mémoire cache comprend un circuit (RMUX) de mise à jour de la mémoire cache agencé pour gérer la mémoire cache à la manière d'une pile en enregistrant des données dans la mémoire cache selon un ordre déterminé, de manière à éjecter de la mémoire cache les données les plus anciennes, une donnée ancienne étant une donnée lue dans la mémoire antérieurement à une donnée plus récente, une donnée plus récente étant une donnée lue plus récemment qu'une donné plus ancienne, une donnée plus récente pouvant avoir été enregistrée dans la mémoire cache antérieurement à une donnée plus ancienne.

3. Mémoire cache selon la revendication 2, dans laquelle le circuit (RMUX) de mise à jour de la mémoire cache est agencé pour enregistrer une nouvelle donnée au sommet de la pile tout en décalant vers le bas de la pile les données déjà présentes dans la mémoire cache et, si la pile est pleine, éjecter de la pile la donnée se trouvant au bas de la pile.

4. Mémoire cache selon la revendication 3, dans lequel le circuit (RMUX) de mise à jour de la mémoire cache est également agencé pour placer au sommet de la pile une donnée lue dans la mémoire cache, et décaler vers le bas de la pile les données déjà présentes dans la mémoire cache, et, si la pile est pleine, éjecter de la pile la donnée se trouvant au bas de la pile.

5. Mémoire cache selon l'une des revendications 1 à 4, dans lequel le circuit asynchrone de lecture (AAR) comprend une pluralité de comparateurs (CMP0j) pour comparer simultanément les étiquettes se trouvant dans la mémoire cache relativement à l'étiquette de référence, et une pluralité de multiplexeurs (25-j) pour, si une étiquette est identique à l'étiquette de référence, sélectionner la donnée de base associée à l'étiquette identique et la fournir sur la sortie du circuit de lecture.

6. Mémoire cache selon l'une des revendications 1 à 5, comprenant des moyens de connexion électrique à des moyens (DMEM, ATMEM) de stockage d'une pluralité d'attributs (ATi), chaque attribut étant associé à une zone mémoire sécurisée déterminée (MSB(ADrw)) d'une mémoire de donnée (DMEM) et définissant des autorisations d'accès à la zone mémoire sécurisée déterminée, les moyens de connexion étant agencés pour que la mémoire cache enregistre des attributs en tant que données de base, et des adresses de zones mémoire sécurisées associées aux attributs en tant qu'étiquettes associées aux données de base.

7. Mémoire cache selon l'une des revendications 1 à 7, dans laquelle le plan mémoire comprend des bascules logiques (15-0-15-12) recevant un signal de rafraîchissement périodique (CKO).

8. Dispositif de contrôle de l'accès à une mémoire de données (DMEM) comprenant des zones mémoire sécurisées (Pi), la mémoire recevant des commandes (SEL, RW, ADrw) d'accès en lecture ou en lecture/écriture, dispositif comprenant :

- des moyens (DMEM, ATMEM) de stockage d'une pluralité d'attributs (ATi), chaque attribut étant associé à une zone mémoire sécurisée déterminée de la mémoire et définissant des autorisations d'accès à la zone mémoire sécurisée déterminée,
- des moyens pour, lorsqu'une commande d'accès (SEL, RW, ADrw) est envoyée à la mémoire de données, lire un attribut correspondant à une zone mémoire sécurisée visée par la commande d'accès,

  **caractérisé en ce qu'**il comprend ;

- une mémoire cache (CMEM, CMC) pour enregistrer un nombre d'attributs déterminé, la mémoire cache comprenant :

- un plan mémoire (CMEM) comprenant des lignes de mot (CWLj) prévues chacune pour enregistrer un attribut (AT(CWLj)) et une adresse de zone mémoire sécurisée (MSB(CWLj)) à laquelle l'attribut est associé,
- un circuit de gestion (CMC) de la mémoire cache comprenant un circuit asynchrone (AAR) de recherche d'attribut dans la mémoire cache sans décodage d'adresse, agencé pour, lorsqu'une commande d'accès est envoyée à la mémoire de données, rechercher dans la mémoire cache l'attribut correspondant à la zone mémoire sécurisée visée par la commande d'accès, et fournir l'attribut si celui-ci s'y trouve, et
- un circuit synchrone (ASC2, ASC3) de recherche d'attribut, pour rechercher un attribut dans les moyens de stockage (DMEM, ATMEM) si l'attribut ne se trouve pas dans la mémoire cache.

9. Dispositif selon la revendication 8, dans lequel le circuit de gestion (CMC) de la mémoire cache est agencé pour enregistrer dans la mémoire cache un attribut lu dans les moyens de stockage (DMEM, ATMEM) par le circuit synchrone (ASC2, ASC3) de recherche d'attribut.

10. Dispositif selon la revendication 9, dans lequel le circuit (CMC) de gestion de la mémoire cache enregistre dans la mémoire cache, avec chaque attribut, l'adresse (MSB(ADrw)) d'une zone mémoire sécurisée de la mémoire de données à laquelle correspond l'attribut.

11. Dispositif selon la revendication 10, dans lequel le circuit asynchrone (AAR) de recherche d'attribut fournit un attribut lorsque l'adresse (MSB(CWLj) de zone mémoire sécurisée enregistrée dans la mémoire cache avec l'attribut correspond à l'adresse (MSB(ADrw)) de la zone mémoire sécurisée visée par la commande d'accès envoyée à la mémoire de données.

12. Dispositif selon la revendication 11, dans lequel le circuit asynchrone (AAR) de recherche d'attribut comprend une pluralité de comparateurs (CMP0j) pour comparer simultanément des adresses (MSB(CWLj)) de zones mémoire sécurisées enregistrées dans la mémoire cache avec l'adresse (MSB(ADrw)) de la zone mémoire sécurisée visée par la commande d'accès envoyée à la mémoire de données.

13. Dispositif selon l'une des revendications 8 à 12, dans lequel le plan mémoire (CMEM) de la mémoire cache comprend une pluralité de bascules logiques (15-0-15-12) formant des cellules mémoire de la mémoire cache.

14. Dispositif selon l'une des revendications 8 à 13, dans lequel la mémoire cache est prévue pour enregistrer un nombre d'attributs déterminé inférieur au nombre d'attributs enregistrés dans les moyens de stockage, et le circuit de gestion (CMC) de la mémoire cache comprend un circuit (RMUX) de mise à jour de la mémoire cache, pour gérer la mémoire cache à la manière d'une pile en mettant au sommet de la pile le dernier attribut lu dans la mémoire cache et en décalant vers le bas de la pile des attributs présents dans la pile.

15. Dispositif selon la revendication 14, dans lequel le circuit (RMUX) de mise à jour de la mémoire cache est agencé pour enregistrer au sommet de la pile un nouvel attribut lu dans les moyens de stockage (DMEM, ATMEM) par le circuit synchrone (ASC2, ASC3) de recherche d'attribut, et décaler vers le bas les autres attributs présents dans la pile.

16. Dispositif selon l'une des revendications 8 à 15, dans lequel les moyens de stockage sont formés par une zone dédiée (DZ, P15) de la mémoire de données (DMEM), et le circuit synchrone (ASC2, ASC3) de recherche d'attribut est agencé pour, lorsqu'une commande d'accès (SEL, RW, ADrw) est envoyée à la mémoire de données :

- intercepter la commande d'accès si l'attribut correspondant à la zone mémoire sécurisée visée par la commande d'accès ne se trouve pas dans la mémoire cache,

- lire dans la zone dédiée de la mémoire de données l'attribut correspondant à la zone mémoire sécurisée visée par la commande d'accès interceptée, puis
- appliquer la commande d'accès à la mémoire de données.

**17.** Dispositif selon la revendication 16, dans lequel une commande d'accès comprend au moins un signal d'accès (SEL, RW) et une adresse d'accès (ADrw), et dans lequel le circuit synchrone (ASC2, ASC3) de recherche d'attribut est agencé pour, lorsque l'attribut correspondant à la zone mémoire sécurisée visée par la commande d'accès ne se trouve pas dans la mémoire cache :

- empêcher l'application à la mémoire de données du signal d'accès et de l'adresse d'accès, et
- appliquer à la mémoire de données un signal (RWF) d'accès en lecture et une adresse d'accès (ADF) correspondant à la zone dédiée aux attributs, de manière que la mémoire de données fournisse l'attribut correspondant à la zone mémoire sécurisée visée par la commande d'accès.

**18.** Dispositif selon l'une des revendications 16 et 17, dans lequel le circuit synchrone de recherche d'attribut, le circuit de gestion de la mémoire cache et la mémoire de données sont synchronisés par des signaux d'horloge décalés (CK0, CK1, CK2).

**19.** Dispositif selon l'une des revendications 16 à 18, dans lequel le circuit synchrone de recherche d'attribut est agencé pour envoyer un signal d'attente (WAIT) à un organe (CPU) émetteur de la commande d'accès, pendant qu'un attribut est recherché dans la mémoire de données.

**20.** Dispositif selon la revendication 19, dans lequel l'organe émetteur est une unité centrale (CPU) de microprocesseur, qui est programmée pour maintenir une commande d'accès tant que le signal d'attente (WAIT) est présent.

**21.** Dispositif selon l'une des revendications 8 à 20, comprenant un circuit de contrôle (MAC) pour fournir un signal (IT, ISR) d'autorisation ou de refus de l'accès à la mémoire de données, en fonction de la valeur de l'attribut et de la nature de la commande d'accès envoyée à la mémoire de données.

**22.** Procédé de contrôle de l'accès à une mémoire de données comprenant des zones mémoire sécurisées et recevant des commandes (SEL, RW, ADrw) d'accès en lecture ou en lecture/écriture, en utilisant une pluralité d'attributs (ATi) enregistrés dans des moyens (DMEM, ATMEM) de stockage d'attributs, chaque attribut étant associé à une zone mémoire sécurisée déterminée de la mémoire et définissant des autorisations d'accès à la zone mémoire sécurisée déterminée, comprenant une étape de recherche d'attribut lorsqu'une commande d'accès est envoyée à la mémoire de données,
    **caractérisé en ce que** :

- une mémoire cache (CMEM, CMC) est prévue pour enregistrer un nombre d'attributs déterminé inférieur au nombre d'attributs enregistrés dans les moyens de stockage, et
- l'étape de recherche d'attribut comprend :

- une étape asynchrone de recherche dans la mémoire cache de l'attribut correspondant à la zone mémoire sécurisée visée par la commande d'accès, sans utiliser de décodeur d'adresse, et de lecture de l'attribut si celui-ci s'y trouve, et
- une étape synchrone de recherche de l'attribut dans les moyens de stockage, si l'attribut ne se trouve pas dans la mémoire cache.

**23.** Procédé selon la revendication 22, comprenant l'enregistrement dans la mémoire cache d'un attribut non trouvé dans la mémoire cache et lu dans les moyens de stockage.

**24.** Procédé selon la revendication 23, comprenant l'enregistrement dans la mémoire cache, avec chaque attribut, de l'adresse (MSB(ADrw)) d'une zone mémoire sécurisée de la mémoire de données à laquelle correspond l'attribut.

**25.** Procédé selon la revendication 24, dans lequel l'étape asynchrone de recherche d'un attribut dans la mémoire cache comprend une pluralité de comparaisons simultanées entre d'une part des adresses (MSB(CWLj)) de zones mémoire sécurisées enregistrées dans la mémoire cache et d'autre part l'adresse (MSB(ADrw)) de la zone mémoire sécurisée visée par la commande d'accès envoyée à la mémoire de données.

**26.** Procédé selon l'une des revendications 22 à 25, comprenant une étape de mise à jour de la mémoire cache, pour gérer la mémoire cache à la manière d'une pile en mettant au sommet de la pile le dernier attribut lu dans la mémoire cache, et en décalant vers le bas de la pile des attributs présents dans la pile.

**27.** Procédé selon la revendication 26, dans lequel l'étape de mise à jour de la mémoire cache comprend une étape d'enregistrement au sommet de la pile d'un nouvel attribut lu dans les moyens de stockage(DMEM, ATMEM), en décalant vers le bas de la pile les autres attributs présents dans la pile.

**28.** Procédé selon l'une des revendications 22 à 27, dans lequel les moyens de stockage sont formés par une zone dédiée de la mémoire de données, et en ce que l'étape synchrone de recherche d'attribut comprend les étapes suivantes :

- intercepter la commande d'accès si l'attribut correspondant à la zone mémoire sécurisée visée par la commande d'accès ne se trouve pas dans la mémoire cache,
- lire dans la zone dédiée de la mémoire de données l'attribut correspondant à la zone mémoire sécurisée visée par la commande d'accès interceptée, puis
- appliquer la commande d'accès à la mémoire de données.

**29.** Procédé selon la revendication 28, dans lequel une commande d'accès comprend au moins un signal d'accès (SEL, RW) et une adresse d'accès (ADrw), et l'étape de synchrone recherche d'attribut comprend les étapes suivantes:

- empêcher l'application à la mémoire de données du signal d'accès et de l'adresse d'accès, et
- appliquer à la mémoire de données un signal (RWF) d'accès en lecture et une adresse d'accès (ADF) correspondant à la zone dédiée aux attributs, de manière que la mémoire de données fournisse l'attribut correspondant à la zone mémoire sécurisée visée par la commande d'accès.

**30.** Procédé selon l'une des revendications 28 et 29, comprenant les étapes suivantes, exécutées en synchronisation avec trois signaux d'horloge décalés (CK0, CK1, CK2) :

- à l'apparition d'un front de variation d'un premier signal d'horloge (CK0), chercher un attribut dans la mémoire cache, puis,

   1) si l'attribut est trouvé dans la mémoire cache, appliquer la commande d'accès à la mémoire de données à l'apparition d'un front de variation d'un deuxième signal d'horloge (CK1),
   2) si l'attribut n'est pas trouvé dans la mémoire cache :

- appliquer une adresse de lecture (ADrw) et un signal de lecture (SELF, RWF) à la mémoire de données à l'apparition du front de variation du deuxième signal d'horloge (CK1), puis
- à l'apparition d'un front de variation d'un troisième signal d'horloge (CK2), lire l'attribut dans la mémoire cache, puis,
- à l'apparition du front de variation suivant du premier signal d'horloge (CK0), enregistrer l'attribut dans la mémoire cache, puis,
- à l'apparition du front de variation suivant du deuxième signal d'horloge (CK1), appliquer la commande d'accès à la mémoire de données.

**31.** Procédé selon l'une des revendications 22 à 30, comprenant l'envoi d'un signal d'attente (WAIT) à un organe émetteur de la commande d'accès, pendant qu'un attribut est recherché dans la mémoire de données.

**32.** Procédé selon la revendication 31, dans lequel l'organe émetteur est une unité centrale (CPU) de microprocesseur, qui est programmée pour maintenir la commande d'accès tant que le signal d'attente est présent.

**33.** Procédé selon l'une des revendications 22 à 32, comprenant une étape de contrôle pour fournir un signal (IT, ISR) d'autorisation ou un refus de l'accès à la mémoire de données, en fonction de la valeur de l'attribut et de la nature de la commande d'accès envoyée à la mémoire de données.

**Fig. 1**

**Fig. 2**

**Fig. 3**

EP 1 510 925 A2

Fig. 5

EP 1 510 925 A2

**Fig. 4**

**Fig. 6**

**Fig. 7**

**Fig. 8**

Fig. 9A — CK0

Fig. 9B — CK1

Fig. 9C — CK2

Fig. 9D — SEL

Fig. 9E — RW

Fig. 9F — ADRW    $AD_{RW} = AD_{RW}(Wi)$

Fig. 9G — ISINC

Fig. 9H — WAIT

Fig. 9I — IDL    ASEARCH    AMA    IDL

Fig. 9J — SELF

Fig. 9K — RWF    RWF=1 (READ)    RWF=RW

Fig. 9L — ADF    ADF=F//MSB(AD$_{RW}$(Wi))    ADF=AD$_{RW}$(Wi)

Fig. 9M — DT1    DT$_1$=AT    DT$_1$=DT$_1$ (RW=1)

$t_0$  $t_1$  $t_2$  $t_3$ $t_3'$ $t_4$  $t_5$  $t_6$  $t_7$

Fig. 10

**Fig. 11**

**Fig. 12**

**Fig. 13**

**Fig. 14**

CK0=0↑1-ISINC=0

| CWL0 | 1 | MSB2 | AT2 |
|------|---|------|-----|
| CWL1 | 1 | MSB1 | AT1 |
| CWL2 | 1 | MSB0 | AT0 |
| CWL3 | 0 |      |     |
| CWL4 | 0 |      |     |
| CWL5 | 0 |      |     |
| CWL6 | 0 |      |     |
| CWL7 | 0 |      |     |

**Fig. 15A**

CK0=0↑1-ISINC=0 ⟹1

| ⟹ CWL0 | 1 | MSB3 | AT3 |
|------|---|------|-----|
| CWL1 | 1 | MSB2 | AT2 |
| CWL2 | 1 | MSB1 | AT1 |
| CWL3 | 1 | MSB0 | AT0 |
| CWL4 | 0 |      |     |
| CWL5 | 0 |      |     |
| CWL6 | 0 |      |     |
| CWL7 | 0 |      |     |

**Fig. 15B**

CK0=0↑1-ISINC=0 ⟹1

| CWL0 | 1 | MSB7 | AT7 |
|------|---|------|-----|
| CWL1 | 1 | MSB6 | AT6 |
| CWL2 | 1 | MSB5 | AT5 |
| CWL3 | 1 | MSB4 | AT4 |
| **CWL4** | 1 | **MSB3** | **AT3** |
| CWL5 | 1 | MSB2 | AT2 |
| CWL6 | 1 | MSB1 | AT1 |
| CWL7 | 1 | MSB0 | AT0 |

⟹

**Fig. 16A**

CK0=0↑1-ISINC=1

| **CWL0** | 1 | **MSB3** | **AT3** |
|------|---|------|-----|
| CWL1 | 1 | MSB7 | AT7 |
| CWL2 | 1 | MSB6 | AT6 |
| CWL3 | 1 | MSB5 | AT5 |
| CWL4 | 1 | MSB4 | AT4 |
| CWL5 | 1 | MSB2 | AT2 |
| CWL6 | 1 | MSB1 | AT1 |
| CWL7 | 1 | MSB0 | AT0 |

**Fig. 16B**

CK0=0↑1-ISINC=0

| CWL0 | 1 | MSB3 | AT3 |
|------|---|------|-----|
| CWL1 | 1 | MSB7 | AT7 |
| CWL2 | 1 | MSB6 | AT6 |
| CWL3 | 1 | MSB5 | AT5 |
| CWL4 | 1 | MSB4 | AT4 |
| CWL5 | 1 | MSB2 | AT2 |
| CWL6 | 1 | MSB1 | AT1 |
| CWL7 | 1 | MSB0 | AT0 |

**Fig. 17A**

CK0=0↑1-ISINC=0 ⟹1

| **CWL0** | 1 | **MSB8** | **AT8** |
|------|---|------|-----|
| CWL1 | 1 | MSB3 | AT3 |
| CWL2 | 1 | MSB7 | AT7 |
| CWL3 | 1 | MSB6 | AT6 |
| CWL4 | 1 | MSB5 | AT5 |
| CWL5 | 1 | MSB4 | AT4 |
| CWL6 | 1 | MSB2 | AT2 |
| CWL7 | 1 | MSB1 | AT1 |

**Fig. 17B**

**Fig. 18**